# EUROPEAN PATENT APPLICATION

(11) **EP 4 507 190 A1**
(43) Date of publication of application: **12.02.2025**
(21) Application number: 23784786.8
(22) Date of filing: 05.04.2023
(51) Int. Cl.: H02P 27/06, B60L 7/14, B60L 9/18, G01M 7/02, H02K 7/06, H02K 7/075, H02P 5/74

(54) **ELECTRIC ACTUATOR AND ELECTRIC MOBILITY VEHICLE**

(30) Priority: 08.04.2022 JP 2022064830; 08.04.2022 JP 2022064829; 07.07.2022 JP 2022109889; 02.10.2022 JP 2022159176
(71) Applicant: Kokusai Keisokuki Kabushiki Kaisha, Tama-shi, Tokyo 206-0025 (JP)
(72) Inventor: MATSUMOTO, Sigeru, Tama-shi, Tokyo 206-0025 (JP); MATSUMOTO, Shinichi, Tama-shi, Tokyo 206-0025 (JP); MURAUCHI, Kazuhiro, Tama-shi, Tokyo 206-0025 (JP); MIYASHITA, Hiroshi, Tama-shi, Tokyo 206-0025 (JP); SUZUKI, Masami, Tama-shi, Tokyo 206-0025 (JP)
(74) Representative: Lewis Silkin LLP
(86) International application number: PCT/JP2023/014154
(87) International publication number: WO 2023/195502

(57) **Abstract**

The purpose of this invention is to improve efficiency of regenerative energy utilization.

An electric actuator according to an embodiment of the present invention includes an electric motor that repeats forward rotation and reverse rotation at a desired frequency, and a motion converter that converts forward and reverse rotary motions output by the electric motor into unidirectional rotary motion.

## Description

### TECHNICAL FIELD

The present invention relates to electric actuators and electric mobility vehicles provided with the electric actuators.

### BACKGROUND ART

Industrial machinery and electric vehicles in which electric actuators such as motors are used as drive sources are widely used. Power saving of drive sources is strongly required to realize energy saving in society. An example of related technology is disclosed in Patent Document 1.

### PRIOR ART DOCUMENT

### PATENT DOCUMENT

[Patent Document 1] Japanese Patent Application Publication No. 2017-139839

### SUMMARY OF THE INVENTION

### PROBLEM TO BE SOLVED BY THE INVENTION

An electric car disclosed in Patent Document 1 only provides regenerative electric power generation by a motor generator during inertial driving and braking, and there is room for improvement.

The present invention has been made in view of the above circumstances, and the object of the present invention is to provide an electric actuator with improved power-saving performance.

### MEANS FOR SOLVING THE PROBLEM

According to an aspect of the present invention, there is provided an electric actuator including an electric motor that repeats forward rotation and reverse rotation at a desired frequency, and a motion converter that converts forward and reverse rotary motions output by the electric motor into unidirectional rotary motion.

### EFFECT OF THE INVENTION

According to an embodiment of the present invention, an electric actuator with improved power-saving performance can be provided.

### BRIEF DESCRIPTION OF THE DRAWINGS

[FIG. 1] FIG. 1 is a perspective view of an electric actuator according to a first embodiment of the present invention.
[FIG. 2] FIG. 2 is a plan view showing a schematic structure of the electric actuator according to the first embodiment of the present invention.
[FIG. 3] FIG. 3 is a side view of a connecting rod of the first embodiment of the present invention.
[FIG. 4] FIG. 4 is a side view of a crankshaft of the first embodiment of the present invention.
[FIG. 5] FIG. 5 is a block diagram showing a schematic configuration of an electric power feeding system (electric drive system) of the electric actuator according to the first embodiment of the present invention.
[FIG. 6] FIG. 6 is a diagram showing a circuit configuration of the electric drive system of the first embodiment.
[FIG. 7] (a) is a drive waveform for one cycle of a motor of the first embodiment of the present invention, (b) is a graph showing a rotation speed [rpm] of the motor in the first half of one cycle of the motor, (c) is a graph showing the rotation speed of the motor in the second half of one cycle of the motor, (d) is a graph showing torque [Nm] of the motor in the first half of one cycle of the motor, and (e) is a graph showing the torque of the motor in the second half of one cycle of the motor.
[FIG. 8] FIG. 8 is a diagram contrasting operation of the motor of the first embodiment of the present invention with operation of a conventional motor.
[FIG. 9] FIG. 9 is a diagram illustrating innovations in control of an electric actuator according to a second embodiment of the present invention.
[FIG. 10] FIG. 10 is a diagram illustrating innovations in control of an electric actuator according to a third embodiment of the present invention.
[FIG. 11] FIG. 11 is a perspective view of an electric actuator according to a fourth embodiment of the present invention.
[FIG. 12] FIG. 12 is a side view of the electric actuator according to the fourth embodiment.
[FIG. 13] FIG. 13 is a plan view of the electric actuator according to the fourth embodiment.
[FIG. 14] FIG. 14 is a front view of the electric actuator according to the fourth embodiment.
[FIG. 15] FIG. 15 is a configuration diagram of a crankshaft of the electric actuator according to the fourth embodiment.
[FIG. 16] FIG. 16 is a block diagram showing a schematic configuration of an electric power feeding system (electric drive system) of the electric actuator according to the fourth embodiment.
[FIG. 17] FIG. 17 is a perspective view of an electric actuator according to a fifth embodiment of the present invention.
[FIG. 18] FIG. 18 is a plan view of the electric actuator according to the fifth embodiment of the present invention.
[FIG. 19] FIG. 19 is a perspective view of an electric actuator according to a sixth embodiment of the present invention.
[FIG. 20] FIG. 20 is a perspective view of an electric actuator according to a seventh embodiment of the present invention.
[FIG. 21] FIG. 21 is a diagram showing a mechanism of a gear unit of the seventh embodiment.
[FIG. 22] FIG. 22 is a perspective view of an electric actuator according to an eighth embodiment of the present invention.
[FIG. 23] FIG. 23 is a block diagram showing a schematic configuration of an electric power feeding system (electric drive system) of the electric actuator according to the eighth embodiment.
[FIG. 24] FIG. 24 is a diagram showing a schematic configuration of a power system of an electric car according to a ninth embodiment of the present invention.
[FIG. 25] FIG. 25 is a diagram showing a schematic configuration of a drive mechanism of a railroad car according to a tenth embodiment of the present invention.
[FIG. 26] FIG. 26 is a block diagram showing a schematic configuration of an electric power feeding system (electric drive system) of the railroad car according to the tenth embodiment.
[FIG. 27] FIG. 27 is an external view of a tire test device according to an eleventh embodiment of the present invention.
[FIG. 28] FIG. 28 is an external view of the tire test device according to the eleventh embodiment.
[FIG. 29] FIG. 29 is a diagram showing an internal structure of a torque generating device of the eleventh embodiment.
[FIG. 30] FIG. 30 is a block diagram showing a schematic configuration of an electric power feeding system of the eleventh embodiment.
[FIG. 31] FIG. 31 is a side view showing a basic configuration of a uniformity and dynamic balance multi-test device according to a twelfth embodiment of the present invention.
[FIG. 32] FIG. 32 is a diagram schematically showing a method for driving a spindle to rotate in the twelfth embodiment.
[FIG. 33] FIG. 33 is a front view of a measurement section of a balance measurement device according to a thirteenth embodiment of the present invention.
[FIG. 34] FIG. 34 is a side view of the measurement section of the balance measurement device according to the thirteenth embodiment.
[FIG. 35] FIG. 35 is a perspective view of a collision simulation test device according to a fourteenth embodiment of the present invention.
[FIG. 36] FIG. 36 is a perspective view showing structures of a test section and a belt mechanism of the collision simulation test device according to the fourteenth embodiment.
[FIG. 37] FIG. 37 is a block diagram showing a modified example of the schematic configuration of the electric power feeding system for the electric actuator.
[FIG. 38] FIG. 38 is a block diagram showing another modified example of the schematic configuration of the electric power feeding system for the electric actuator.

### EMBODIMENTS FOR CARRYING OUT THE INVENTION

The inventor has discovered that efficiency of regenerative electric power utilization can be increased by reversing drive of an electric motor at a high repetition frequency. The high repetition frequency is, for example, 10 Hz or higher, but is not limited to 10 Hz or higher.

Embodiments of the present invention will be described below with reference to the drawings. In the following description, identical or corresponding items will be marked with identical or corresponding reference numerals, and redundant explanations will be omitted. In addition, in each figure, when multiple items with a common reference numeral are indicated, the reference numeral is not necessarily marked to all of those multiple items and the indication of the reference numeral to some of those multiple items is omitted as appropriate.

### <First Embodiment>

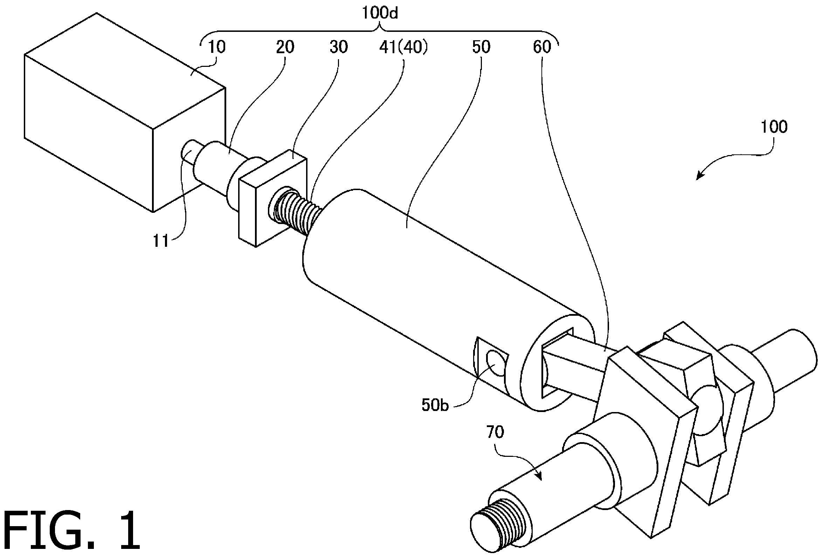

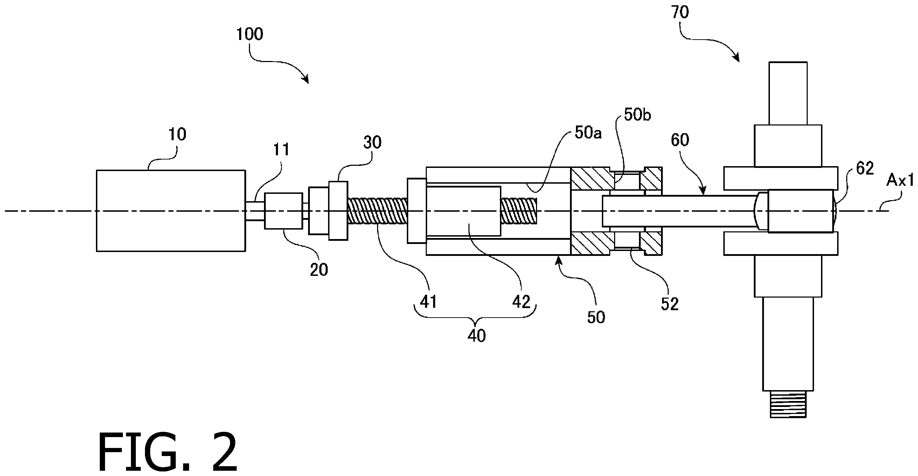

FIGS. 1 and 2 are a perspective view and a plan view, respectively, of an electric actuator 100 according to a first embodiment of the present invention. In FIG. 2, a portion of a piston 50, which will be described later, is shown in cross-sectional view.

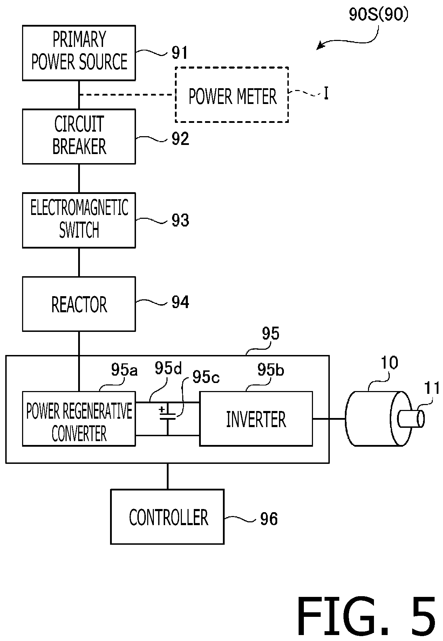

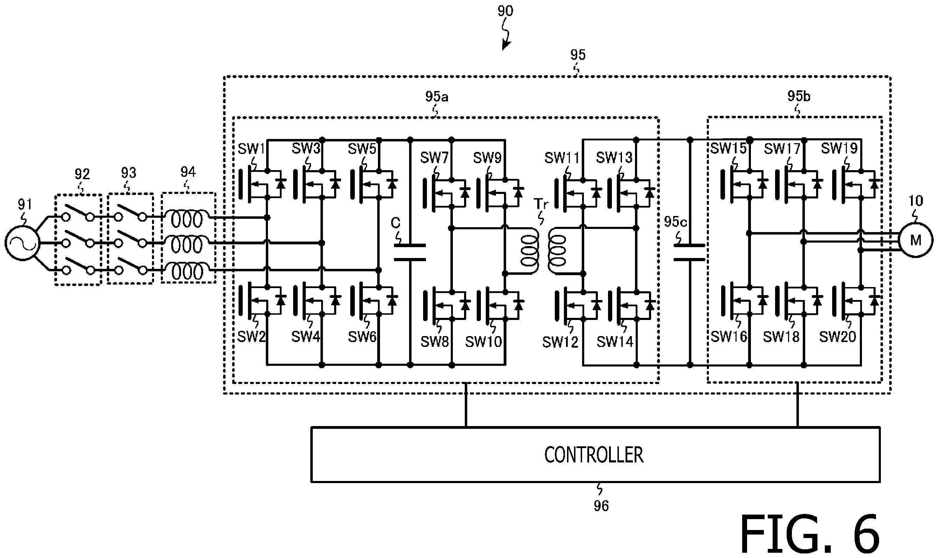

As shown in FIG. 1, the electric actuator 100 includes a drive unit 100d and a crankshaft 70. The electric actuator 100 may further include a servo amplifier 95 (drive device) and a controller 96 which are described below with reference to FIGS. 5 and 6.

In this specification, the term electric actuator may mean only a motor and a mechanism driven by the motor, may mean a set of a motor and a mechanism (referred to as a mechanism part) plus a drive device that drives the motor, or may mean to further include a controller that controls the drive device. When the electric actuator includes the drive device and the controller, the drive device and the controller may be installed in the same housing as the mechanism part, or may be configured as a device separate from the mechanism part and connected to the mechanism part by a cable or the like.

The drive unit 100d includes a motor 10 (electric motor), a bearing 30, a ball screw 40 (feed screw mechanism), linear motion part 50 (hereinafter referred to as "piston 50"), and a connecting rod 60.

The motor 10 is, for example, an ultra-low inertia and high output type AC servomotor. The use of such ultra-low inertia and high output type motor 10 enables to drive the motor 10 to rotate back and forth at high frequencies of, for example, 100 Hz or higher.

A screw shaft 41 of the ball screw 40 is rotatably supported by the bearing 30 fixed to a frame (not shown). The screw shaft 41 is connected to a shaft 11 of the motor 10 by a shaft coupling 20.

The piston 50 is a cylindrical member to which a hollow portion 50a extending in the direction of an axis line Ax1 is formed. The axis line Ax1 is a center line of the drive unit 100d and is a straight line common to axes of rotation of the motor 10 and the ball screw 40. A nut 42 of the ball screw 40 is for example housed in one end portion of the hollow portion 50a of the piston 50 (left end portion in FIG. 2) and is fixed to the piston 50.

At the other end portion of the piston 50 (right end in FIG. 2), a pin 52 is attached perpendicular to an axis of the piston 50 (in other words, parallel to the crankshaft 70).

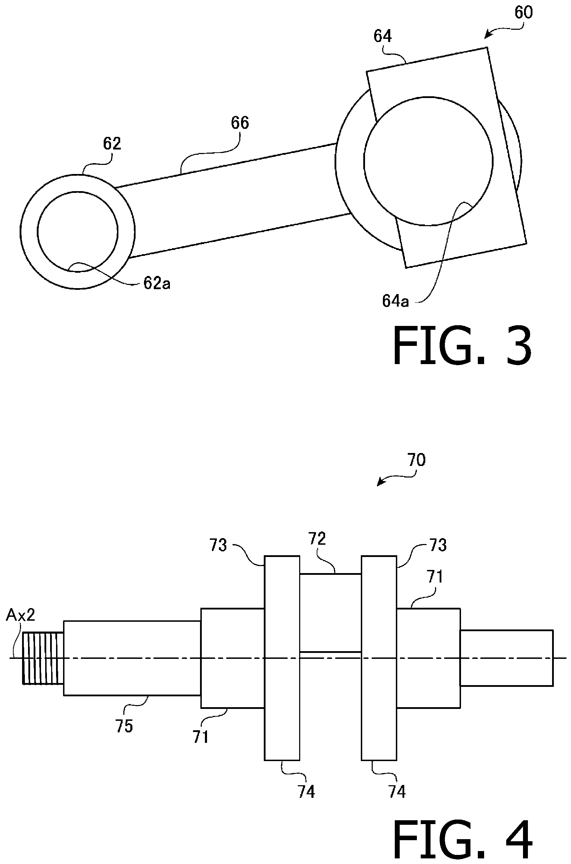

FIG. 3 is a side view of the connecting rod 60. The connecting rod 60 has a small end part 62 to which a small diameter pin hole 62a is formed, a large end part 64 to which a large diameter pin hole 64a is formed, and a rod part 66 connecting the small end part 62 and the large end part 64. The pin holes 62a and 64a are formed parallel to each other.

The pin 52 is inserted into the pin hole 62a of the small end part 62, for example via a bush (not shown). Both ends of the pin 52 are inserted into a pair of pin holes 50b (FIG. 2) formed to the other end portion of the piston 50 and fixed to the piston 50. As a result, the connecting rod 60 is connected to the other end portion of the piston 50 via the pin 52 at the small end part 62 to be rotatable within a certain angular range with the pin 52 as the central axis of rotation. In addition to the pin 52 (first pin), the connecting rod 60 is rotatably connected to a crank pin 72 (second pin) which will be described later.

FIG. 4 shows a side view of the crankshaft 70. The crankshaft 70 has a pair of crank journals 71 coaxially disposed (i.e., axes of rotation or centerlines are coincident), a crank pin 72 disposed eccentrically with respect to axis lines of the crank journals 71 (i.e., axis Ax2 which is an axis of rotation of the crankshaft 70), a pair of crank arms 73 connecting the crank journals 71 and the crank pin 72, a pair of balance weights 74 disposed on opposite sides of respective crank arms 73 with respect to the axis line Ax2, and an output shaft 75 coaxially coupled to one of the crank journals 71. The balance weights 74 are formed to counteract imbalances created by the crank pin 72 and the crank arms 73, which are eccentric with respect to the axis line Ax2.

The crankshaft 70 is a rotating body rotatably supported at the pair of crank journals 71 by a not-shown pair of bearings (e.g., rolling bearings) fixed to the frame (not shown).

The crank pin 72 is an eccentric pin eccentric with respect to the axis of rotation of the crankshaft 70 and is inserted into the pin hole 64a of the large end part 64 of the connecting rod 60, for example, via a bush (not shown). The crankshaft 70 is thus rotatably connected to the connecting rod 60.

For example, oilless bushes are used as the bushes that engage with the pin holes 62a and 64a of the connecting rod 60. Other types of bearings, such as rolling bearings, may be used in place of the bushes.

The motor 10 is driven so that the shaft 11 repeatedly rotates back and forth within a predetermined angular range. In other words, the motor 10 repeats forward and reverse rotations at a predetermined frequency. The rotation of the motor 10 (more specifically, the reciprocating rotary motion, i.e., forward and reverse rotary motions) is converted into linear motion by the ball screw 40 and transmitted to the piston 50. As a result, the piston 50, together with the nut 42 of the ball screw 40, moves in a reciprocating linear motion on the axis line Ax1 with a predetermined stroke. In other words, the ball screw 40 functions as a first motion converter that converts the reciprocating rotary motion (the forward and reverse rotary motions) of the motor 10 into a reciprocating linear motion. The reciprocating linear motion of the piston 50 in the direction of the axis line Ax1 is transmitted by the connecting rod 60 to the eccentric crank pin 72 of the crankshaft 70 and converted into rotary motion of the crankshaft 70. That is, the connecting rod 60 and the crankshaft 70 (as well as the pin 52 rotatably supporting the connecting rod 60 and the not-shown bearings rotatably supporting the crankshaft 70) configures a crank mechanism (more specifically, a slider crank mechanism) as a second motion converter that converts the reciprocating motion (reciprocating linear motion) into a unidirectional rotary motion (hereinafter referred to as "unidirectional rotary motion").

FIG. 5 is a block diagram showing a schematic configuration of an electric power feeding system 90S (electric drive system 90) that supplies driving electric power to the motor 10. FIG. 6 is a diagram showing a circuit configuration of an electric drive system 90. The electric power feeding system 90S constitutes the electric drive system 90 together with the motor 10.

A primary power source 91 is a commercial power source or electric power supply device, which provides, for example, three-phase alternating current electric power. The electric power supplied from the primary power source 91 (hereinafter referred to as "system electric power") is supplied to a servo amplifier 95 (drive device) via a circuit breaker 92, an electromagnetic switch 93, and a reactor 94. The servo amplifier 95 is an inverter device that converts the alternating current supplied from the primary power source 91 into driving electric power for the motor 10, and supplies the electric power supplied from the primary power source 91 to the motor 10. The motor 10 is connected to an output terminal of the servo amplifier 95, and the drive electric power is supplied from the servo amplifier 95 to the motor 10. The servo amplifier 95 is communicatively connected to a controller 96 and operates in accordance with control by the controller 96.

The servo amplifier 95 includes a power regenerative converter 95a, an inverter 95b, and a capacitor 95c. The power regenerative converter 95a is a converter suitable for electric power regeneration and is, for example, a PWM (Pulse Width Modulation) converter that sinusoidalizes electric power supply side current by PWM control. The power regenerative converter 95a may also be a converter that performs electric power conversion using the 120-degree-energization method. The inverter 95b is, for example, a PWM inverter that controls the output electric power by PWM control. The power regenerative converter 95a of the present embodiment has both a function of rectifying the alternating current supplied from the primary power source 91 during power operation (i.e., an operation mode in which the motor 10 is driven by the electric power supplied from the servo amplifier 95) and a function of generating alternating current of the same quality as the system electric power to be returned to the primary power source 91 during regenerative operation. However, a converter dedicated to electric power operation and a converter dedicated to electric power regeneration may be provided separately.

The power regenerative converter 95a includes switching elements SW1 to SW14, a capacitor (or condenser) C, and a transformer Tr. The inverter 95b includes switching elements SW15 to SW20. The switching elements SW1 to SW20 are, for example, IGBTs (Metal Oxide Semiconductor Field Effect Transistors).

When the electric power supplied from the primary power source 91 (e.g., single-phase three-wire commercial power source or three-phase three-wire commercial power source) is supplied to the motor 10, the switching elements SW1 to SW6 are repeatedly turned on and off by the controller 96 in accordance with a frequency of the alternating current electric power supplied from the primary power source 91 to rectify the alternating current electric power supplied from the primary power source 91.

When the electric power supplied from the primary power source 91 is supplied to the motor 10, the electric power rectified by the switching elements SW1 to SW6 is smoothed by the capacitor C.

When the electric power supplied from the primary power source 91 is supplied to the motor 10, the switching elements SW7 and SW10 and the switching elements SW8 and SW9 are alternately and repeatedly turned on and off by the controller 96 so that the electric power smoothed by the capacitor C is transmitted from the primary coil L1 to the secondary coil L2 of the transformer Tr.

When the electric power supplied from the primary power source 91 is supplied to the motor 10, the switching elements SW11 and SW14 and the switching elements SW12 and SW13 are alternately and repeatedly turned on and off by the controller 96 to rectify the electric power transmitted from the primary coil L1 to the secondary coil L2.

When the electric power supplied from the primary power source 91 is supplied to the motor 10, the electric power rectified by the switching elements SW11 to SW14 is smoothed by the capacitor 95c.

When the electric power supplied from the primary power source 91 is supplied to the motor 10, the switching elements SW15 to SW20 are repeatedly turned on and off by the controller 96, so that the electric power smoothed by the capacitor 95c is converted into alternating current electric power with phase differences of 120 degrees and supplied to the motor 10 and supplied to the motor 10.

When the regenerated electric power from the motor 10 is supplied to the servo amplifier 95, the alternating current electric powers supplied from the three phases of the motor 10, respectively, are rectified by diodes connected in parallel with the switching elements SW15 to SW20, respectively.

When the regenerated electric power from the motor 10 is supplied to the servo amplifier 95, the electric power rectified by the diodes connected in parallel with the switching elements SW15 to SW20, respectively, is smoothed by the capacitor 95c.

When the regenerated electric power from the motor 10 is supplied to servo amplifier 95, switching elements SW11 and SW14 and the switching elements SW12 and SW13 are alternately and repeatedly turned on and off by the controller 96, so that the electric power smoothed by the capacitor 95c is transmitted from the secondary coil L2 to the primary coil L1 of the transformer Tr.

When the regenerated electric power from the motor 10 is supplied to the servo amplifier 95, the electric power transmitted from the secondary coil L2 to the primary coil L1 is rectified by diodes connected in parallel with the switching elements SW7 to SW10, respectively.

When the regenerated electric power from the motor 10 is supplied to the servo amplifier 95, the electric power rectified by the diodes connected in parallel with the switching elements SW7 to SW10, respectively, is smoothed by the capacitor C.

When the regenerated electric power from the motor 10 is supplied to the servo amplifier 95, the switching elements SW1 to SW6 are repeatedly turned on and off by the controller 96, so that the electric power smoothed by the capacitor C is converted into alternating current electric power and supplied to the primary power source 91.

When driving the motor 10 (during power operation), the alternating current electric power output from the reactor 94 is converted into direct current by the power regenerative converter 95a, smoothed by the capacitor 95c, and then converted into alternating current (e.g., pulse train) driving electric power by the inverter 95b. The driving electric power output from the inverter 95b is input to the motor 10 to drive the motor 10 to rotate.

When the motor 10 generates regenerative electric power (during regenerative operation), the regenerative electric power output from the motor 10 is converted into direct current by the inverter 95b and input to the power regenerative converter 95a via a direct current bus bar 95d. One system of the direct current bus bar 95d consists of a pair of positive and negative conductive wires. The power regenerative converter 95a converts the direct current electric power supplied from the direct current bus bar 95d to sinusoidal alternating current and outputs the alternating current to the primary power source via the reactor 94, the electromagnetic switch 93, and the circuit breaker 92.

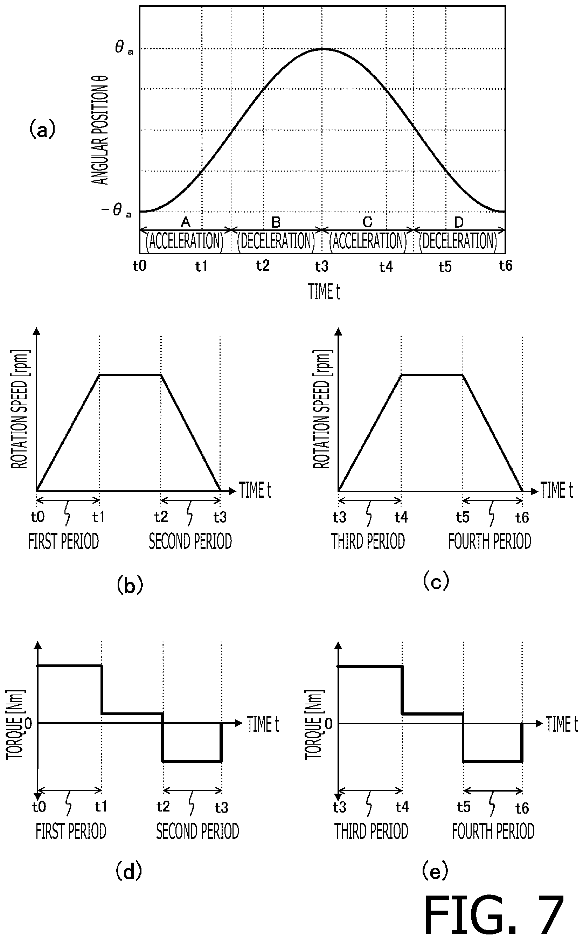

FIG. 7(a) is a graph showing a drive waveform of one cycle of the motor 10. FIG. 7(b) is a simplified graph showing a change in the rotation speed [rpm] of the motor 10 in the first half of one cycle of the motor 10, and FIG. 7(c) is a simplified graph showing the change in the rotation speed of the motor 10 in the second half of one cycle of the motor 10. FIG. 7(d) is a simplified graph showing a change in torque [Nm] of the motor 10 in the first half of one cycle of the motor 10, and FIG. 7(e) is a simplified graph showing the change in torque of the motor 10 in the second half of one cycle of the motor 10. In FIG. 7(a), the horizontal axis represents time t, and the vertical axis represents an angular position θ of the shaft 11. In FIGS. 7(b) and 7(c), the horizontal axis represents time t, and the vertical axis represents the rotation speed of motor 10. In FIGS. 7(d) and 7(e), the horizontal axis represents time t, and the vertical axis represents torque of motor 10. The respective time widths in FIGS. 7(a) through 7(e) coincide with each other.

The motor 10 is driven so that the angular position θ of the shaft 11 fluctuates repeatedly in the range of -θa to θa in accordance with a sinusoidal drive waveform during the repeated passage of time t from time t0 to time t6. The drive waveform of the motor 10 is not limited to a sine wave. When the drive waveform of the motor 10 is a sinusoidal drive waveform, an actual waveform of a rotation speed (the rotation speed) of the motor is a cosine waveform. However, in FIGS. 7(b) and 7(c), for convenience of explanation, the waveform of the rotation speed of the motor is shown in a simplified form, with constant speed change for a range with large changes and no speed change (constant rotation speed) for a range with small changes.

In section A shown in FIG. 7(a), or more precisely, for example, in the first period from time t0 to time t1, the shaft 11 is accelerated in the positive rotation direction. In other words, in the first period, the rotation speed of the motor 10 in forward rotation direction increases, and torque generated at this time is defined as a positive torque (acceleration torque). Also, at this time, electric power is supplied from the servo amplifier 95 to the motor 10 (power operation). For example, in the first period, electric power accumulated in the capacitor 95c and the capacitor C is supplied to the motor 10, and shortfall of electric power is supplied to motor 10 from the primary power source 91.

In section B shown in FIG. 7(a), or more precisely, for example, in the second period from time t2 to time t3, the shaft 11 is decelerated in the positive rotation direction. In other words, in the second period, the rotation speed of the motor 10 in the forward rotation direction decreases, and negative torque (deceleration torque) is generated. At this time, regenerative electric power is supplied from the motor 10 to the servo amplifier 95 (regeneration). For example, in the second period, the regenerated electric power from the motor 10 is accumulated in the capacitor 95c and the capacitor C.

In section C shown in FIG. 7(a), or more precisely, for example, in the third period from time t3 to time t4, the shaft 11 is accelerated in the negative rotational direction. In other words, in the third period, the rotation speed of the motor 10 in the reverse rotation direction increases, and torque generated at this time is defined as a positive torque (acceleration torque). Also, at this time, electric power is supplied from the servo amplifier 95 to the motor 10 (power operation). For example, in the third period, the electric power accumulated in the capacitor 95c and the capacitor C is supplied to the motor 10, and shortfall of electric power is supplied to the motor 10 from the primary power source 91.

In section D shown in FIG. 7(a), or more precisely, for example, in the fourth period from time t5 to time t6, the shaft 11 is decelerated in the negative rotation direction. In other words, in the fourth period, the rotation speed of the motor 10 in the reverse rotation direction decreases, and negative torque (deceleration torque) is generated. At this time, regenerative electric power is supplied from the motor 10 to the servo amplifier 95 (regenerative operation). For example, in the fourth period, the regenerated electric power from the motor 10 is accumulated in the capacitor 95c and the capacitor C.

In this way, the power operation and regeneration are repeated, and the electric power accumulated in the capacitor 95c and the capacitor C during regeneration can be used to drive the motor 10 in the next power operation, thus reducing the electric power supplied from the primary power source 91 to the motor 10 in the next power operation. This allows to make the electric drive system 90 more power-efficient. Furthermore, the shaft 11 of the motor 10 rotates back and forth by repeating acceleration (power operation) and deceleration (regenerative operation) while alternating the direction. Such reciprocating rotation is repeated at, for example, a repetition frequency of 500 Hz at maximum.

As described above, in the present embodiment, the supply of electric power to the motor 10 and the generation of regenerative electric power by the motor 10 are alternately repeated in order to make the motor 10 perform repeating acceleration and deceleration operations. Short-time (e.g., about one cycle of the motor 10) voltage fluctuations in the direct current bus bar 95d caused by the transfer of electric power to and from the motor 10 are adjusted (in other words, leveled) mainly by the capacitor 95c. Therefore, most of the electric power supplied to the motor 10 in sections A and C is recovered and reused as regenerative electric power in sections B and D, allowing the motor 10 to be driven with almost no consumption of electric power supplied from the primary power source 91.

**[Table 1]**

| No. | FREQUENCY F | TORQUE T₀ | POWER CONSUMPTION VALUE W_{A} | OUTPUT POWER VALUE W_{B} | ENERGY SAVING RATE R=100(1-W_{A}/W_{B}) |
|---|---|---|---|---|---|
| 1 | 10 Hz | 23.5 % | 0.354 kW | 7.808 kW | 95.5 % |
| 2 | 25 Hz | 70.0 % | 1.093 kW | 26.959 kW | 95.9 % |
| 3 | 50 Hz | 76.0 % | 0.971 kW | 15.777 kW | 93.8 % |
| 4 | 75 Hz | 76.0 % | 0.870 kW | kW 10.539 | 91.7 % |
| 5 | 100 Hz | 64.0 % | 0.843 kW | 5.641 kW | 85.1 % |
| 6 | 125 Hz | 77.0 % | 0.991 kW | 6.449 kW | 84.6 % |
| 7 | 150 Hz | 62.7 % | kW 0.781 | kW 3.598 | 78.3 % |
| 8 | 175 Hz | 74.0% | 1.037 kW | 4.267 kW | 75.7 % |
| 9 | 200 Hz | 83.0 % | 1.338 kW | 4.672 kW | 71.4 % |

Table 1 shows driving conditions and measurement results of electric power consumption of the electric actuator 100 of the present embodiment.

"Frequency F" is the number of times per second that one cycle of driving shown in FIG. 7 is repeated. Electric power consumption was measured by varying the frequency F at 25Hz intervals up to a maximum of 200Hz. However, the minimum frequency was set not at 0Hz but at 10Hz, which allows stable operation.

"Torque T₀" is a maximum value (amplitude) of a relative torque (expressed as a percentage against a rated torque) of the shaft 11 of the motor 10.

The "Power Consumption Value W_{A}" is an average value of electric power consumption of the electric drive system 90 as a whole, as measured by a power meter PM upstream of the circuit breaker 92 (FIG. 5).

"Output Power W_{B}" is an average value of electric power output from the servo amplifier 95 to the motor 10.

"Energy Saving Rate R" is a ratio of electric power consumption reduced by the reuse of regenerative electric power and is calculated by R = 100 × (1-W_{A}/W_{B}).

By using the electric actuator 100 of the present embodiment, the energy saving rate of over 70% is achieved at the frequencies F below 200 Hz. In particular, the energy saving rate exceeding 90% is achieved in a low frequency range below 75 Hz.

The electric power consumption reduction effect in by the electric actuator 100 of the present embodiment can be obtained even when the repetition frequency of the reciprocating rotation of the motor 10 is set at 1Hz, but when the repetition frequency is set at 3Hz or higher (more preferably 5Hz or higher), the regenerative electric power is efficiently reused by the electric actuator 100 itself, resulting in good energy saving rate.

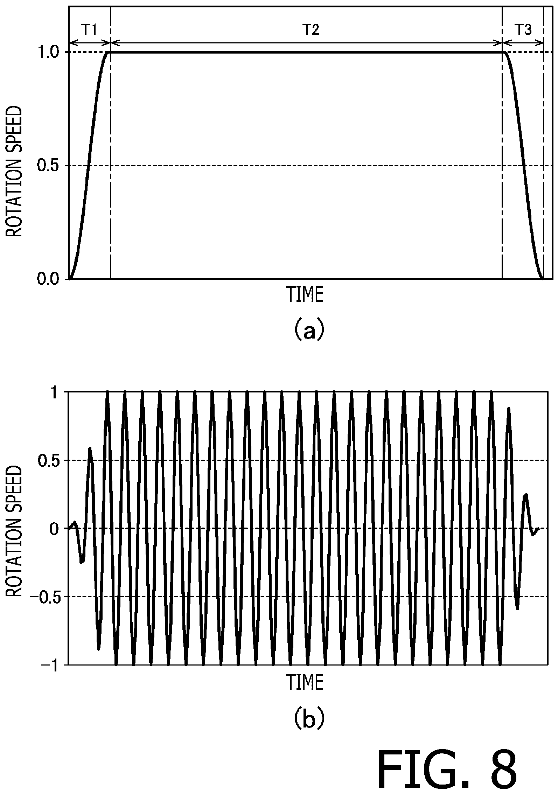

FIG. 8(a) is a graph schematically showing a drive waveform of a typical conventional motor, and FIG. 8(b) is a graph schematically showing a drive waveform of the motor 10 of the present embodiment.

As shown in FIG. 8(a), in the driving of the typical conventional motor, the motor is accelerated to a predetermined rotation speed in section T1 and is then continuously driven at a constant speed (section T2), and is then decelerated to a stop at the end (section T3). In such driving, regenerative electric power is generated only in section T3. Therefore, the electric power consumption reduction effect through the use of regenerative electric power is modest.

On the other hand, in the present embodiment, as shown in FIG. 8(b), acceleration (power operation) and deceleration (regenerative operation) of the motor 10 are repeated at a high frequency over the entire section from the start to the end of driving. The regenerative electric power generated during deceleration is immediately consumed in the next power operation. That is, the generation and consumption of the regenerative electric power are routinely repeated from the start to the end of driving. As a result, in the present embodiment, the electric power consumption reduction effect by the use of the regenerative electric power is extremely significant.

As described above, with the electric actuator 100 according to the present embodiment, the motor 10 can output unidirectional rotary motion while actively generating regenerative energy by rotating the motor 10 forward and in reverse due to a motion converter that converts the forward and reverse rotary motions output by the motor 10 into unidirectional rotary motion. Therefore, the unidirectional rotary motion used for mobility vehicles such as automobiles and trains can be obtained with less electric power consumption than when the unidirectional rotary motion is obtained directly from the shaft of the motor 10.

### <Second Embodiment>

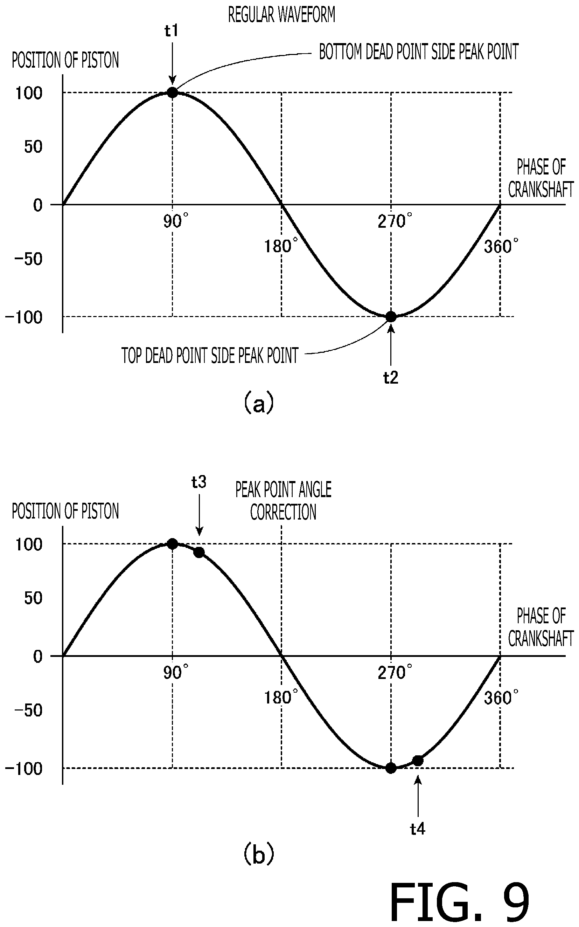

FIG. 9 is a diagram illustrating innovations in control of an electric actuator according to the present embodiment. FIG. 9(a) shows an example of control in the electric actuator 100 according to the first embodiment, and FIG. 9(b) shows an example of control of the electric actuator according to the present embodiment.

The vertical axes in FIGS. 9(a) and 9(b) show position of the piston 50 in reciprocating linear motion. Positions 100 and -100 indicate the positions of the piston 50 when the slider crank mechanism of the electric actuator is at the bottom dead point and top dead point, respectively.

The horizontal axes in FIGS. 9(a) and 9(b) show phase of the crankshaft 70 in unidirectional rotary motion. The phases 90 and 270 show the phases of the crankshaft 70 when the slider crank mechanism of the electric actuator is at the bottom dead point and top dead point, respectively.

A configuration of the electric actuator according to the present embodiment is identical to the configuration of the electric actuator 100 of the first embodiment, except that the controller 96 is configured to be able to perform control of the motor 10 described below (phase shift control). Therefore, in the electric actuator according to the present embodiment, the reciprocating rotary motion of the motor 10 is also converted into a reciprocating linear motion by the ball screw 40, and the reciprocating linear motion is further converted into and output as a unidirectional rotary motion by the slider crank mechanism. The sinusoidal waveforms in FIGS. 9(a) and 9(b) show a relationship between the position of the piston 50 and the phase of the crankshaft 70 in these electric actuators.

In the electric actuator 100 according to the first embodiment, as shown in FIG. 9(a), the controller 96 Servo amplifier 95 is controlled so that the direction of rotation of the motor 10 is switched from forward to reverse at timing t1 when the piston 50 reaches the bottom dead point, and so that the direction of rotation of motor 10 is switched from reverse to forward at timing t2 when the piston 50 reaches the top dead point. This allows the reciprocating linear motion to be converted into the rotary motion while maintaining the direction of rotation of the crankshaft 70 due to inertia at the dead points (top dead point and bottom dead point) where no rotational force is generated on the crankshaft 70 by the movement of the piston 50. In other words, the reciprocating linear motion can be converted into unidirectional rotary motion.

When switching between forward and reverse rotations of the motor 10, a large torque is generated in the motor 10. Therefore, if the direction of rotation is switched at the top dead point and bottom dead point, where the force transmitted from the piston 50 to the crankshaft 70 does not act in the tangential direction (rotational direction) but only in the radial direction, a large force in the radial direction of the crankshaft 70 is generated due to the large torque generated by the motor 10. As a result, vibration occurs in the crankshaft 70, which may inhibit smooth rotation of the crankshaft 70.

Taking these circumstances into consideration, in the electric actuator of the present embodiment, the controller 96 controls the servo amplifier 95 to switch the rotation of the motor 10 between forward and reverse rotations while avoiding timing t1 when the piston 50 reaches the bottom dead point and timing t3 when it reaches the top dead point. For example, as shown in FIG. 9(b), the controller 96 may control the servo amplifier 95 to switch the direction of rotation from forward to reverse at timing t3, which is slightly later than timing t1 when the piston 50 reaches its bottom dead point, and to switch the direction of rotation from reverse to forward at timing t4, which is slightly later than timing t2 when the piston 50 reaches the top dead point. The time difference (t3-t1, t4-t2) corresponds, for example, to about 0.5 degrees of the phase of the crankshaft 70, and displacement that occurs during this time difference is generally within a backlash (joint gap) of the crank mechanism. The above time difference (t3-t1, t4-t2) can be set to 1.5 degrees or less of the phase of the crankshaft 70, and preferably 1 degree or less. Furthermore, it is more desirable that the above time difference (t3-t1, t4-t2) is set to 0.5 degrees or less.

As described above, by controlling the motor 10 to switch the direction of rotation at the positions off from the top dead point and the bottom dead point, it is possible to apply rotational force at the top dead point and the bottom dead point while suppressing the force acting in the radial direction of the crankshaft 70. Therefore, the electric actuator according to the present embodiment can output smooth unidirectional rotation while suppressing vibration more than the electric actuator 100 according to the first embodiment.

Specific control methods include a method of providing a constant phase difference in phase of the control of the motor 10 relative to the phase of the crankshaft 70 over the entire control section, and a method of gradually increasing and decreasing (eliminating) the phase difference in the vicinity of the dead points (upper and lower dead points) (e.g., within ±10° of the dead points).

Although FIG. 9(b) shows an example of switching the direction of rotation after passing through the top and bottom dead points, the controller 96 may control the servo amplifier 95 to switch the direction of rotation before passing through the top and bottom dead points.

### <Third Embodiment>

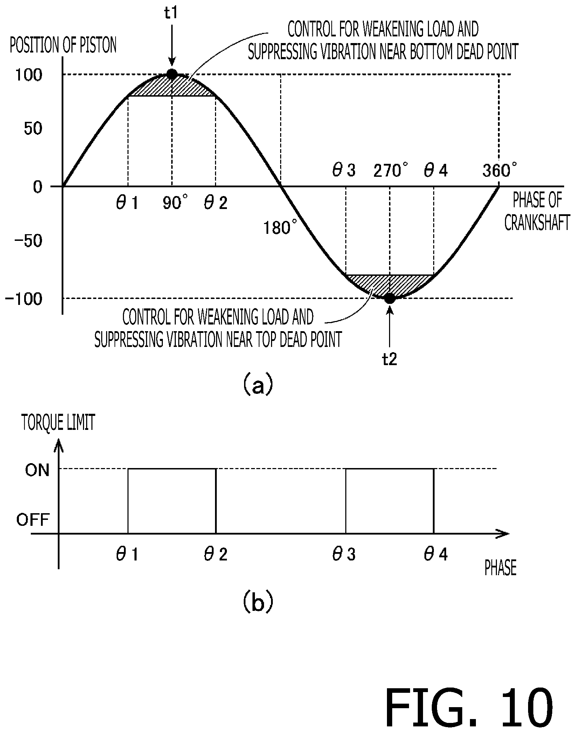

FIG. 10 is a diagram illustrating innovations in the control of the electric actuator according to the present embodiment. FIG. 10(a) is a diagram showing the relationship between the position of the piston 50 and the phase of the crankshaft 70 in the electric actuator according to the present embodiment, and FIG. 10(b) is a diagram showing a relationship between torque limitation and the phase of the crankshaft 70 in the electric actuator according to the present embodiment.

A configuration of the electric actuator according to the present embodiment is identical to the configuration of the electric actuator 100 of the first embodiment, except that the controller 96 is configured to be able to perform control of the motor 10 described below (load suppression control).

As described above in the second embodiment, when the direction of rotation of the motor 10 is switched at the top dead point and the bottom dead point, a large force acts on the crankshaft 70 in the radial direction, and vibration is likely to occur on the crankshaft 70. Therefore, in the present embodiment, the controller 96 controls the servo amplifier 95 so that torque of the motor 10 is limited at least at the timings of reaching the dead points (the top dead point and the bottom dead point). For example, as shown in FIG. 10, the controller 96 may limit the torque of the motor 10 near the upper and lower dead points (θ₁to θ₂ and θ₃ to θ₄) where the direction of rotation switches, and may control the motor 10 within the limited torque range. This prevents excessive force from being applied to the crankshaft 70 in the radial direction, thereby suppressing the occurrence of vibrations that inhibit smooth rotation of the crankshaft 70. Therefore, the electric actuator according to the present embodiment can output smooth unidirectional rotation while suppressing vibration more than the electric actuator 100 according to the first embodiment.

### <Fourth Embodiment>

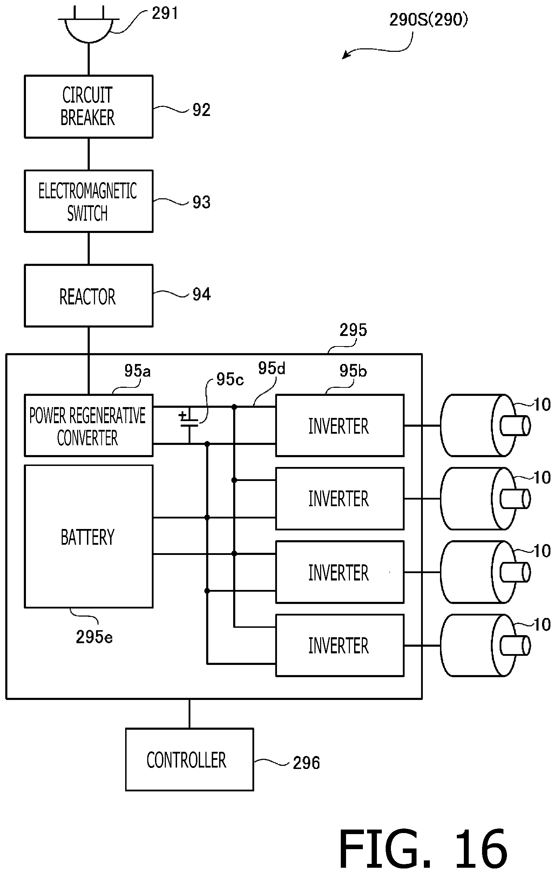

The electric actuator 100 of the first embodiment described above includes a single drive unit 100d, but a plurality of drive units may be provided to an electric actuator. An electric actuator 200 according to a fourth embodiment of the present invention described next includes four drive units 200d. The electric actuator 200 may include a servo amplifier 295 (drive device), which is described later with reference to FIG. 16, and a controller 296.

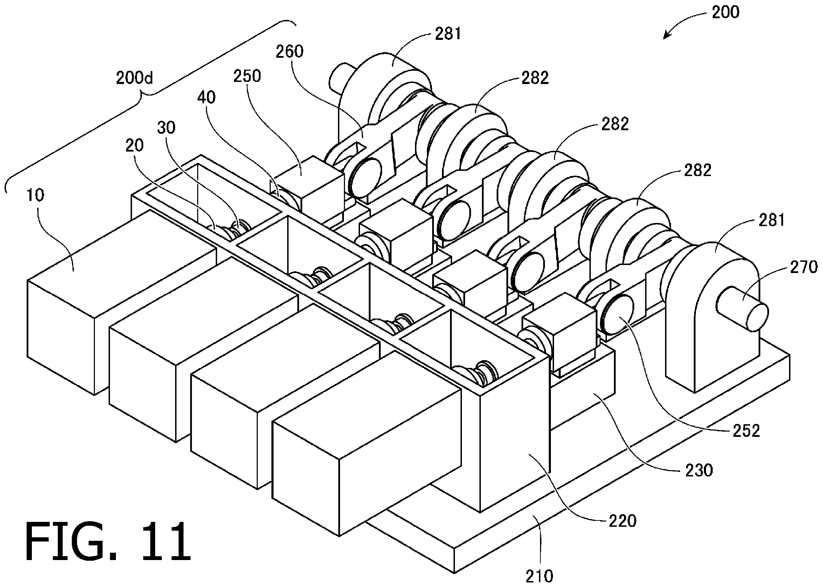

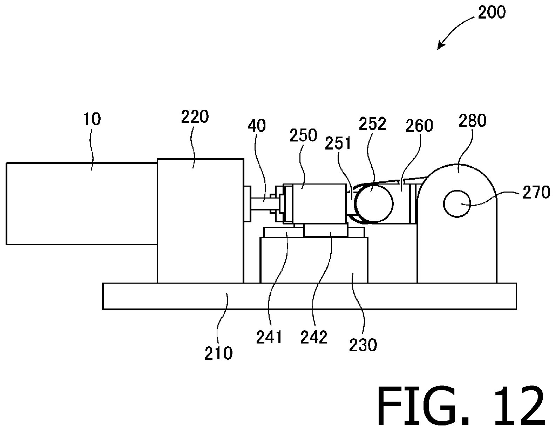

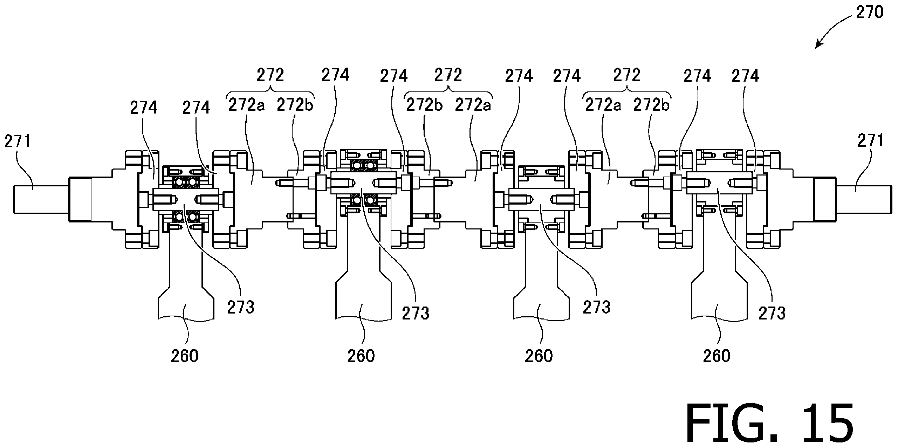

FIG. 11 is a perspective view of the electric actuator 200 according to the fourth embodiment of the present invention. FIGS. 12 through 14 are side, plan, and front views of the electric actuator 200, respectively. FIG. 15 is a configuration diagram of a crankshaft 270 of the electric actuator 200.

The electric actuator 200 according to the fourth embodiment of the present invention is a four-cylinder actuator that mimics a structure of a four-cylinder engine, and includes a crankshaft 270 and four drive units 200d connected to the crankshaft 270. In other words, the electric actuator 200 includes four electric motors, four first motion converters, and four second motion converters, with the four second motion converters sharing an output shaft for unidirectional rotary motion as described below. The electric actuator 200 further includes the servo amplifier 295 (drive device), which is described later with reference to FIG. 16, and the controller 296.

Each drive unit 200d has a structure similar to the drive unit 100d of the first embodiment and includes the motor 10, the shaft coupling 20, the bearing 30, the ball screw 40, a piston 250, and a connecting rod 260, as shown in FIG. 11.

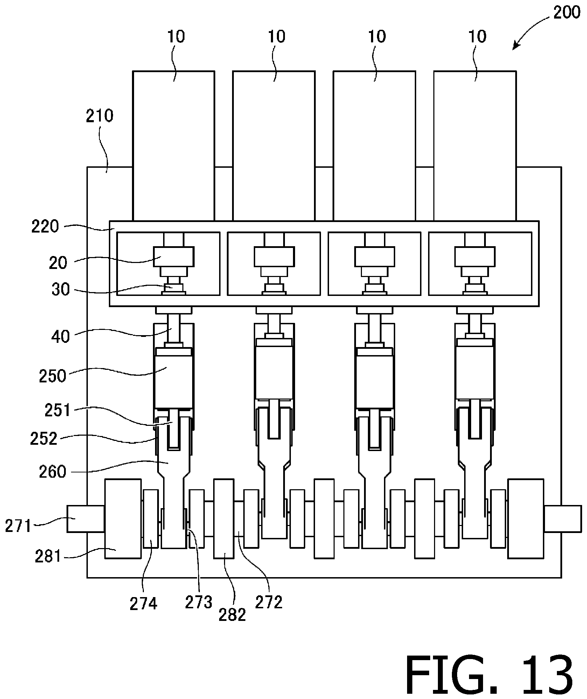

As shown in FIG. 12, the motor 10 is fixed to a frame 220 which houses the shaft coupling 20, and the frame 220 is fixed on a base 210. As shown in FIG. 13, the output shaft of the motor 10 is connected by the shaft coupling 20 to the shaft of the ball screw 40, which is supported by the bearing 30 provided to the frame 220.

A piston 250 is fixed to the nut of the ball screw 40. As shown in FIG. 12, the piston 250 is placed on a carriage 242 that can move along a rail 241, which is disposed parallel to the shaft of the ball screw 40 on a top surface of a frame 230. By placing the piston 250 on the carriage 242 in this manner, the linear motion of the piston 250 is guided by the rail 241 and the carriage 242. This prevents excessive bending stress from acting vertically to the ball screw 40 as the piston 250 performs its reciprocating linear motion.

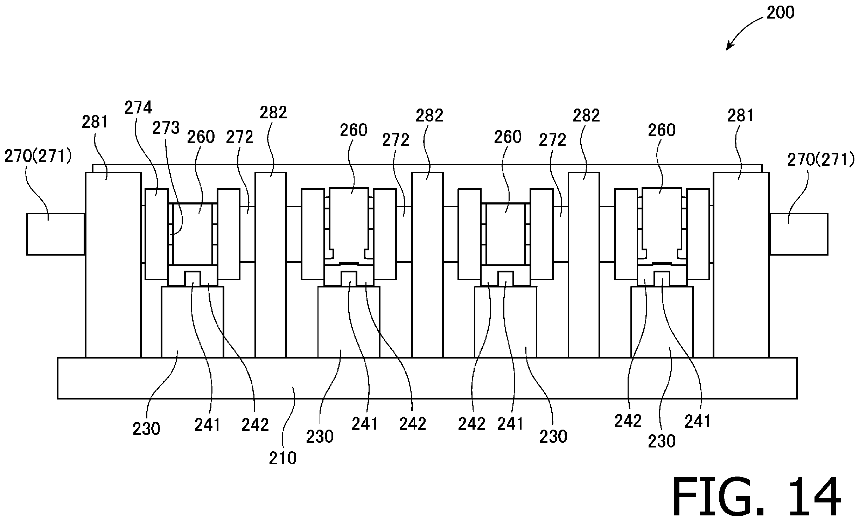

As shown in FIGS. 12 and 13, an end part 251 of the piston 250 is rotatably connected to one end (clevis section) of the connecting rod 260 by a pin 252 (first pin). As a result, the connecting rod 260 can rotate within a certain angular range with the pin 252 as a central axis of rotation in association with the reciprocating linear motion of the piston 250. As shown in FIGS. 13 and 14, the other end of the connecting rod 260 is rotatably connected to the crankshaft 270 by a crank pin 273.

The crankshaft 270 is a rotating body and has a structure that mimics a crankshaft for a four-cylinder engine. As shown in FIG. 15, the crankshaft 270 consists of a plurality of parts, which are fixed to each other with bolts. With such configuration, the crankshaft can be easily configured for any number of drive units d, not just for the four-cylinder type.

Specifically, as shown in FIGS. 14 and 15, the crankshaft 270 includes crank journals (crank journals 271 and crank journals 272) supported by bearings provided in bearing sections (bearing sections 281 and bearing sections 282) standing from the base 210, the crank pins 273 rotatably connected to the connecting rods 260, and crank arms 274 that joint the crank pins 273 at eccentric positions with respect to axes of the crank journals. The crank pins 273 are eccentric pins eccentric with respect to an axis of rotation of the crankshaft 270.

The crank journals 271 and 272 and the crank pins 273 are bolted to the crank arms 274, respectively, and the crank journals 271 and 272 and the crank pins 273 are connected to each other via the crank arms 274.

The crankshaft 270 includes two types of crank journals: the crank journal 271 which has an output shaft, and the crank journal 272 which is sandwiched between crank arms 274. The crank journal 272 sandwiched between the crank arms 274 consists of two parts (a crank journal 272a and a crank journal 272b) to allow insertion into the bearing, and after inserting one part (the crank journal 272a) into the bearing, the other part (the crank journal 272b) is bolted to form one part.

In the electric actuator 200 configured as described above, the reciprocating rotary motion of the motor 10 is converted into the reciprocating linear motion of the piston 250 by the ball screw 40. The reciprocating linear motion of the piston 250 is further converted into a unidirectional rotary motion of the crankshaft 270 by the connecting rod 260 and the crankshaft 270 constituting a slider-crank mechanism. That is, as with the electric actuator 200 of the first embodiment, the electric actuator 200 is configured to convert the reciprocating rotary motion of the motor 10 into the unidirectional rotary motion for output.

The electric actuator 200 differs from the electric actuator 100 in that the connecting rods 260 of the four drive units 200d are rotatably fitted to the four crank pins 273 of the crankshaft 270, respectively. In the electric actuator 200, the crankshaft 270 is rotationally driven by the four drive units 200d connected to the crankshaft 270. In other words, the four drive units 200d share the crankshaft 270, which is the output shaft of the unidirectional rotary motion output by their respective crank mechanisms, so that the power generated by the four drive units 200d is combined at the crankshaft 270. This also makes the electric actuator 200 different from the electric actuator 100.

The eccentric directions of the four crank pins 273 included in the crankshaft 270 are not limited, but may be different from each other. For example, the eccentric directions of the four crank pins 273 may be alternately made different by 180°. For example, the eccentric directions of the four crank pins 273 may be made different by 90° so that timings at which the four crank pins 273 come to respective dead points do not coincide. Smooth rotation may be realized by eliminating time when no rotational force is acting on the crankshaft 270 with this configuration.

FIG. 16 is a block diagram showing a schematic configuration of an electric power feeding system 290S (electric drive system 290) of the electric actuator 200 according to the fourth embodiment of the present invention. The electric power feeding system 290S, together with the four drive units 200d (specifically, the motors 10), constitute the electric drive system 290.

The electric drive system 290 and the electric power feeding system 290S of the fourth embodiment differ from the first embodiment in that the electric drive system 290 and the electric power feeding system 290S include a plug 291 that is plugged into an outlet of a primary power source (not shown) and in the configuration of the servo amplifier. The servo amplifier 295 of the fourth embodiment includes a battery 295e and four inverters 95b corresponding to the four drive units 200d, respectively. Due to the inclusion of the battery 295e, the electric actuator 200 of the fourth embodiment can be operated using electric power accumulated in the battery 295e even when the electric actuator 200 is disconnected from the primary power source. The battery 295e is connected to the direct current bus bar 95d consisting of a pair of conductors in parallel with the power regenerative converter 95a and the four inverters 95b. Each inverter 95b is connected to the motor 10 of the corresponding drive unit 200d.

The four inverters 95b are connected in parallel with each other to one common system of the direct current bus bar 95d. That is, direct current electric powers generated by the power regenerative converter 95a, the battery 295e, and the capacitor 95c are distributed to the four inverters 95b. The regenerative electric powers output from the four inverters 95b are combined in the direct current bus bar 95d. A portion of the regenerative electric power returned to the direct current bus bar 95d is again distributed to the four inverters 95b. Excess regenerative electric power is stored in the capacitor 95c and the battery 295e, or returned to the primary power source via the power regenerative converter 95a.

If the eccentric directions of the four crank pins 273 are alternately made different by 90° (i.e., the eccentric directions of the four crank pins 273 are 12 o'clock, 3 o'clock, 6 o'clock, and 9 o'clock), the motors 10 of the two drive units 200d that are connected to the eccentric crank pins 273 of the crankshaft 270 being eccentric in the 12 o'clock and 6 o'clock directions and the motors 10 of the remaining two drive units 200d that are connected to the eccentric crank pins 273 of the crankshaft 270 being eccentric in the 3 o'clock and 9 o'clock directions have opposing electric power consumption/regeneration timings, so that most of the regenerative electric power output from the motors 10 of one of the two sets of the two drive units 200d are efficiently consumed by the motors 10 of the other of the two sets of the two drive units 200d. Therefore, it is possible to drive the electric actuators 200 with lower electric power consumption.

### <Fifth Embodiment>

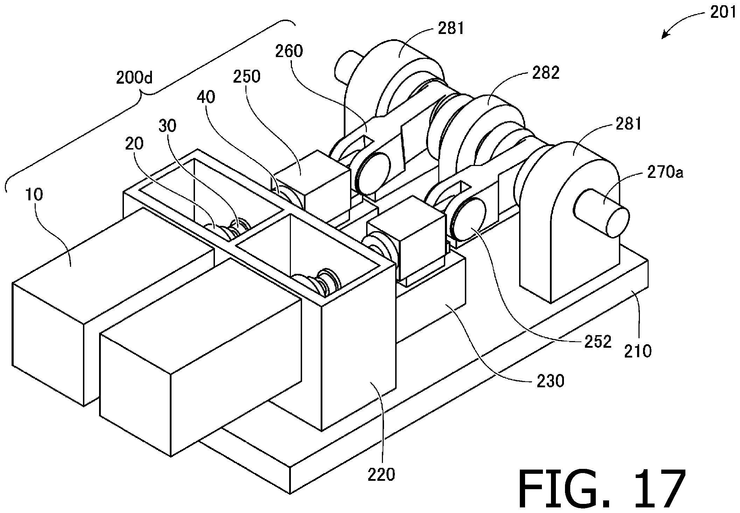

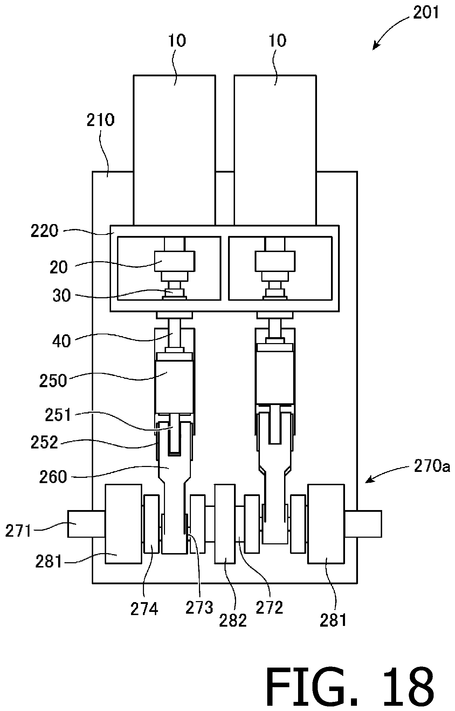

FIG. 17 is a perspective view of an electric actuator 201 according to a fifth embodiment of the present invention. FIG. 18 is a plan view of the electric actuator 201.

As shown in FIG. 17, the electric actuator 201 according to the fifth embodiment of the present invention includes a crankshaft 270a and two drive units 200d connected to the crankshaft 270a. The drive units 200d are as described above in the fourth embodiment, and a detailed description is omitted. In other words, the electric actuator 201 includes two electric motors, two first motion converters, and two second motion converters, with the two second motion converters sharing an output shaft for unidirectional rotary motion. As in the electric actuator 200, the electric actuator 201 may include the servo amplifier 295 (drive device) and the controller 296.

The crankshaft 270a has a structure that mimics a crankshaft for a two-cylinder engine. Like the crankshaft 270 of the fifth embodiment, the crankshaft 270a consists of a plurality of parts, and the plurality of parts are fixed to each other with bolts.

Specifically, as shown in FIG. 18, the crankshaft 270a includes crank journals (the crank journals 271 and the crank journal 272) supported by bearings provided in bearing sections (the bearing sections 281 and the bearing section 282) standing from the base 210, the crank pins 273 rotatably connected to the connecting rods 260, and crank arms 274 that joint the crank pins 273 at eccentric positions with respect to axes of the crank journals. The crankshaft 270a differs from the crankshaft 270 in that the crankshaft 270a has fewer parts than the crankshaft 270 due to the reduced number of cylinders (number of drive units). For example, there is only one crank journal 272 provided between cylinders and only two crank pins 273 provided per cylinder.

In the first through fifth embodiments described above, a crank mechanism (slider crank mechanism) consisting of a connecting rod and a crankshaft is employed as the second motion converter that converts reciprocating motion (reciprocating linear motion) into unidirectional rotary motion, but the present invention is not limited to this configuration. Embodiments that do not use a crankshaft are described below.

### <Sixth Embodiment>

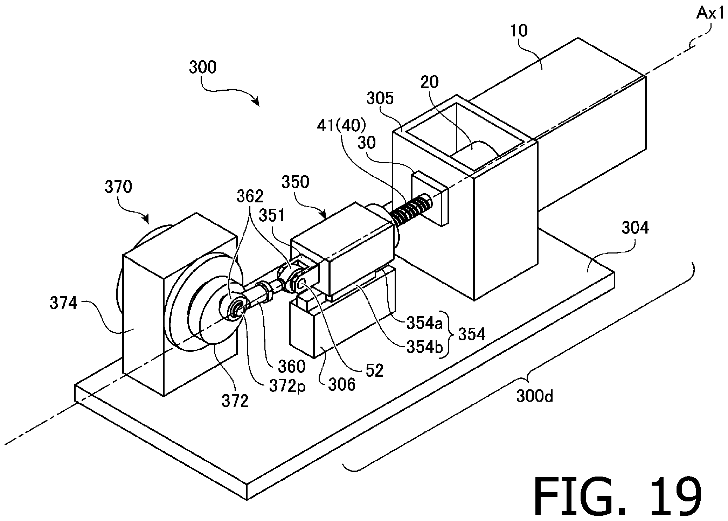

FIG. 19 shows an external view of an electric actuator 300 according to a sixth embodiment of the present invention. The electric actuator 300 of the present embodiment includes a base 304, and a drive unit 300d and a spindle section 370 installed on the base 304. As in the electric actuators according to the embodiments described above, the electric actuator 300 may include a servo amplifier and a controller which are not shown in the figure.

The drive unit 300d includes the motor 10, the ball screw 40 that converts the rotary motion of the motor 10 into linear motion, the bearing 30 that rotatably supports the screw shaft 41 of the ball screw 40, a box-shaped linear motion part 350 (hereinafter referred to as "piston 350") that can move in the axial direction (i.e., in the extending direction of the axis line Ax1), and a guideway-type circulating linear bearing 354 (hereinafter referred to as "linear guide 354") that movably supports the piston 350 in the axial direction, a connecting rod 360 that connects the piston 350 to a spindle 372 described below in the spindle section 370, and a frame 305 and a frame 306 mounted on the base 304. The motor 10 and the bearing 30 are attached to the frame 305. The axis line Ax1 of the drive unit 300d of the present embodiment is a straight line common to the centerlines of the shaft 11 of the motor 10 and the screw shaft 41 of the ball screw 40.

The linear guide 354 includes a rail 354a and a carriage 354b that can travel on the rail 354a. The rail 354a is attached to a top surface of a frame 306, and the carriage 354b is attached to a bottom surface of the piston 350. This allows the piston 350 to be supported to be movable only in the axial direction with respect to the base 304.

The shaft 11 (not shown) of the motor 10 is connected to the screw shaft 41 of the ball screw 40 by the shaft coupling 20. The nut 42 (not shown) of the ball screw 40 is housed in a hollow portion of the piston 350 and secured to the piston 350. As the shaft 11 of the motor 10 rotates back and forth, the piston 350 moves back and forth in the axial direction. A clevis 351 is provided at one end of the piston 350 in the axial direction.

The spindle section 370 includes a spindle 372 which is a rotating body, and a bearing section 374 that rotatably supports the spindle 372. A pin 372p is eccentrically mounted on one end surface of spindle the 372. That is, the pin 372p is an eccentric pin that is eccentric with respect to the axis of rotation of the spindle 372.

Ball joints 362 are provided at both end portions of the connecting rod 360 according to the present embodiment. One ball joint 362 is connected to the clevis 351 via the pins 52 to be rotatable around the pin 52. The other ball joint 362 is connected to the spindle 372 via the pin 372p to be rotatable around the pin 372p. A rolling bearing such as a spherical roller bearing or a spherical ball bearing may be used in place of the ball joint 362.

The motor 10 is driven so that the shaft 11 repeatedly rotates back and forth within a predetermined angular range. The rotation of the motor 10 is converted into linear motion by the ball screw 40 and transmitted to the piston 350. As a result, the piston 350 moves in a reciprocating linear motion along the axis line Ax1 with a predetermined stroke. That is, the ball screw 40 functions as the first motion converter that converts the reciprocating rotary motion output from the motor 10 into the reciprocating linear motion. The reciprocating linear motion of the piston 350 in the direction of the axis line Ax1 is transmitted by the connecting rod 360 to the pin 372p and converted into a unidirectional rotary motion of the spindle 372. That is, the connecting rod 360 and the spindle 372 constitute a link mechanism as the second motion converter that converts the reciprocating motion (reciprocating linear motion) into the unidirectional rotary motion.

### <Seventh embodiment>

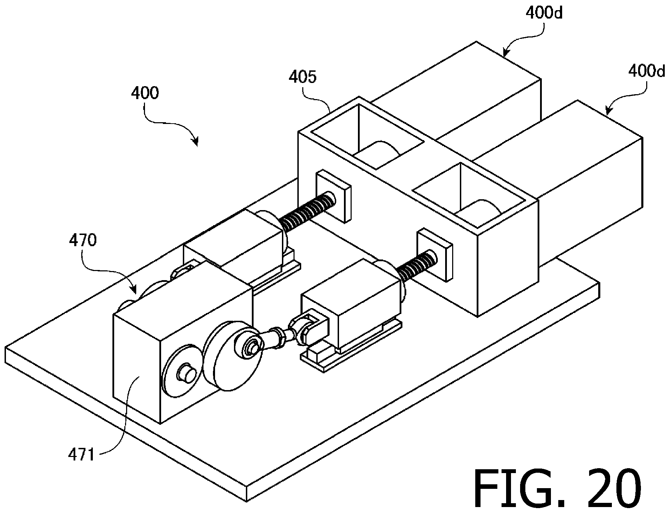

FIG. 20 is an external view of an electric actuator 400 according to a seventh embodiment of the present invention. The electric actuator 400 of the present embodiment includes two drive units 400d disposed side by side, and a gear device 470 connected to the two drive units 400d. As in the electric actuators of the embodiments described above, the electric actuator 400 may include a servo amplifier and a controller which are not shown. A configuration of the drive unit 400d of the present embodiment differs from that of the drive unit 300d of the sixth embodiment in that a frame 405 of the two drive units 400d is integrated, but the other configuration is common to the drive unit 300d.

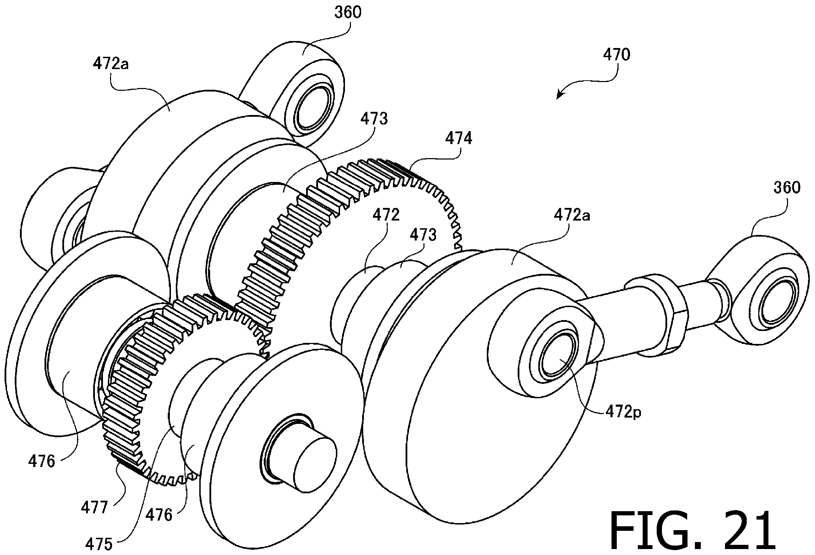

FIG. 21 is a diagram showing a mechanism of the gear device 470. The connecting rods 360 of the drive units 300d are also illustrated in FIG. 21.

The gear device 470 includes a case 471 (FIG. 20), two pairs of bearings 473 and 476 attached to the case 471, a first shaft 472 (input shaft) rotatably supported by the pair of bearings 473, a drive gear 474 attached to the first shaft 472, a second shaft 475 (output shaft) rotatably supported by the pair of bearings 476, and a driven gear 477 attached to the second shaft 475. The drive gear 474 meshes with the driven gear 477, and rotary motion of the first shaft 472 is transmitted to the second shaft 475 via the drive gear 474 and the driven gear 477.

Disk parts 472a are provided to both ends of the first shaft 472, respectively. A pin 472p is eccentrically attached to each disk part 472a. In the present embodiment, eccentric directions of the pins 472p of the two disk parts 472a are 90 degrees apart.

The connecting rod 360 of one of the drive units 400d is connected to the pin 472p of one of the disk parts 472a of the first shaft 472, and the connecting rod 360 of the other of the drive units 400d is connected to the pin 472p of the other of the disk parts 472a of the first shaft 472. Therefore, outputs from the pair of drive units 400d are combined in the gear device 470 (more specifically, the first shaft 472) and output from the second shaft 475.

In the present embodiment, the eccentric directions of the pins 472p of the two disk parts 472a, which are coupled to the connecting rods 360 of the two drive units 400d, respectively, are 90 degrees apart. Therefore, the motors 10 of the two drive units 400d have opposite timing of electric power consumption/regeneration to each other, so that most of the regenerative electric power output from the motor 10 of one of the drive units 400d is efficiently consumed by the motor 10 of the other of the drive units 400d. Therefore, it is possible to drive the electric actuator 400 with lower electric power consumption.

In the first through seventh embodiments described above, a configuration in which reciprocating rotary motion is once converted into reciprocating linear motion by the first motion converter and then further converted into unidirectional rotary motion by the second motion converter is employed. However, the present invention is not limited to this configuration, and configurations in which the reciprocating rotary motion is directly converted into unidirectional rotary motion are also included in the scope of the invention, as in an eighth embodiment of the present invention described next.

### <Eighth Embodiment>

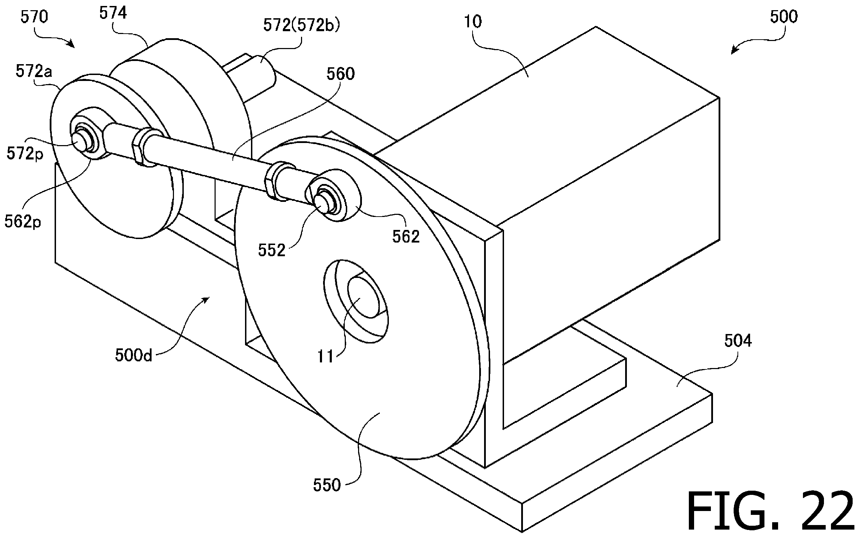

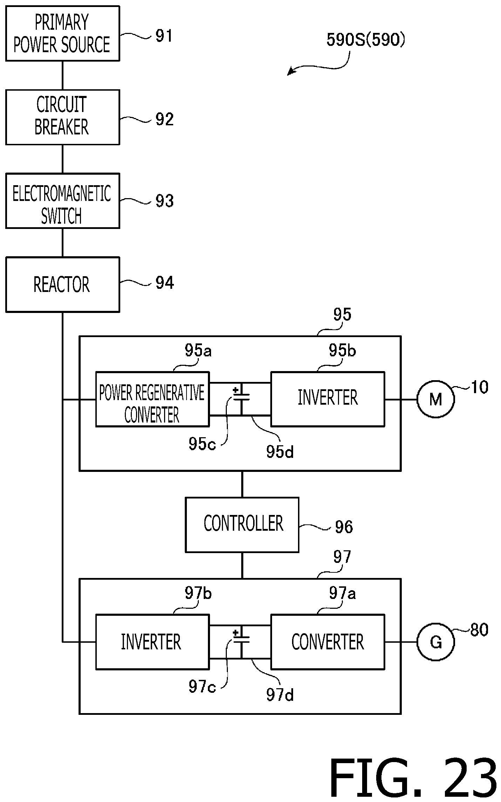

FIG. 22 is an external view of an electric actuator 500 of the eighth embodiment of the present invention. The electric actuator 500 of the present embodiment includes a base 504, and a drive unit 500d and spindle section 570 installed on the base 504. The electric actuator 500 may include the servo amplifier 95 and the controller 96 shown in FIG. 23. The drive unit 500d includes the motor 10, a drive disk 550 (first disk part) coupled to the shaft 11 of the motor 10, and a connecting rod 560. A pin 552 (first pin) is eccentrically attached to the drive disk 550.

The spindle section 570 includes a spindle 572, and a bearing section 574 that rotatably supports the spindle 572. The spindle 572 includes a cylindrical shaft part 572b, a driven disk 572a (second disk part) coupled to one end of the shaft part 572b, and a pin 572p (second pin) eccentrically attached to the driven disk 572a.

Ball joints 562 are provided at both ends of the connecting rod 560. One of the ball joints 562 is connected to the drive disk 550 via the pin 552 and rotatably around the pin 552. The other of the ball joints 562 is connected to the driven disk 572a (spindle 572) via the pin 572p and rotatably around pin 572p. That is, the connecting rod 560 is coupled to the drive disk 550 (pin 552) and the driven disk 572a (pin 572p) with joints (pairs of elements). A rolling bearing such as a self-aligning roller bearing or a self-aligning ball bearing may be used in place of the ball joint 562.

The motor 10 is driven so that the shaft 11 (and the drive disk 550) repeatedly rotates back and forth within a predetermined angular range. The connecting rod 560 is thereby repeatedly pushed and pulled in a lengthwise direction in a predetermined stroke and, as a result, the driven disk 572a (spindle 572) rotates continuously in one direction. That is, the reciprocating rotary motion of the motor 10 is converted into a unidirectional rotary motion of the spindle 572 by a link mechanism consisting of the drive disk 550, the connecting rod 560, and the driven disk 572a. This link mechanism can also be interpreted as a combination of two crank mechanisms (specifically, a first crank mechanism, as a first motion converter, consisting of the drive disk 550 and the connecting rod 560, and a second crank mechanism, as a second motion converter, consisting of the connecting rod 560 and driven disk 572a).

The spindle section 570 of the present embodiment (more specifically, the bearing section 574) has a generator 80 (FIG. 23) built therein.

FIG. 23 is a block diagram showing a schematic configuration of an electric power feeding system 590S (electric drive system 590) of the electric actuator 500 according to the eighth embodiment of the present invention. The electric power feeding system 590S, together with the motor 10, constitutes the electric drive system 590.

The electric drive system 590 and the electric power feeding system 590S of the eighth embodiment differ from the electric drive system 90 and the electric power feeding system 90S of the first embodiment in that the electric drive system 590 and the electric power feeding system 590S include a generator 80, and an inverter device 97 that converts electric power generated by the generator 80 into system electric power (e.g., three-phase alternating current) and supplies the electric power to a primary power source side. The inverter device 97 is communicatively connected to the controller 96 and operates in accordance with the control of by controller 96.

The inverter device 97 includes a converter 97a, an inverter 97b, and a capacitor 97c. For example, the converter 97a includes a full-wave rectifier including a diode bridge circuit. A PWM converter may be provided on an input side of converter 97a to sinusoidalize input current of the converter 97a. The inverter 97b is, for example, a PWM inverter that controls output electric power by PWM control.

The electric power generated by the generator 80 is converted into direct current by the converter 97a, smoothed by the capacitor 97c, and then input to the inverter 97b. A pair of positive and negative conductors constitute one system of a direct current bus bar 97d. The inverter 97b converts the direct current electric power supplied from the direct current bus bar 97d into a sinusoidal alternating current of the same quality as the system electric power and outputs the sinusoidal alternating current to the primary power source 91 side.

According to the present embodiment, electric energy can be used more efficiently because electric power is generated by the generator 80 and supplied to the primary power source 91 side not only during regenerative operation but also during power operation.

In the present embodiment, the generator 80 is built into the bearing 574 of the spindle section 570. However, the generator 80 may be provided in the drive unit 500d. For example, the generator 80 may be installed between the motor 10 and the drive disk 550. The shaft 11 of the motor 10 or the shaft part 572b of the spindle 572 may be extended and connected to an input shaft of the generator 80 to supply a portion of the electric power to the generator 80. A portion of the electric power may also be diverted from a rotary shaft of the drive unit 500d or spindle section 570 and transmitted to the generator 80 by means of a belt, chain, or other winding transmission or gear mechanism.

The generator 80 of the present embodiment is an AC generator, but a DC generator may also be used. In this case, the converter 97a of the inverter device 97 is not needed because rectification of the electric power generated by the generator is not required, and, for example, an output terminal of the DC generator is connected to the direct current bus bar 97d without going through the converter 97a.

A battery may be provided to the inverter device 97, and the battery may be connected to the direct current bus bar 97d in parallel with the capacitor 97c.

A clutch may be provided between the generator 80 and the motor 10, and timing of electric power absorption by the generator 80 may be controlled by intermittency of the clutch.

The direct current bus bar 97d, the capacitor 97c, and the inverter 97b of the inverter device 97 may be shared between the direct current bus bar 95d, the capacitor 95c, and the power regenerative converter 95a of the servo amplifier 95, respectively.

Next, exemplary applications of the electric actuators according to the embodiments of the present invention will be described.

### <nineth embodiment>

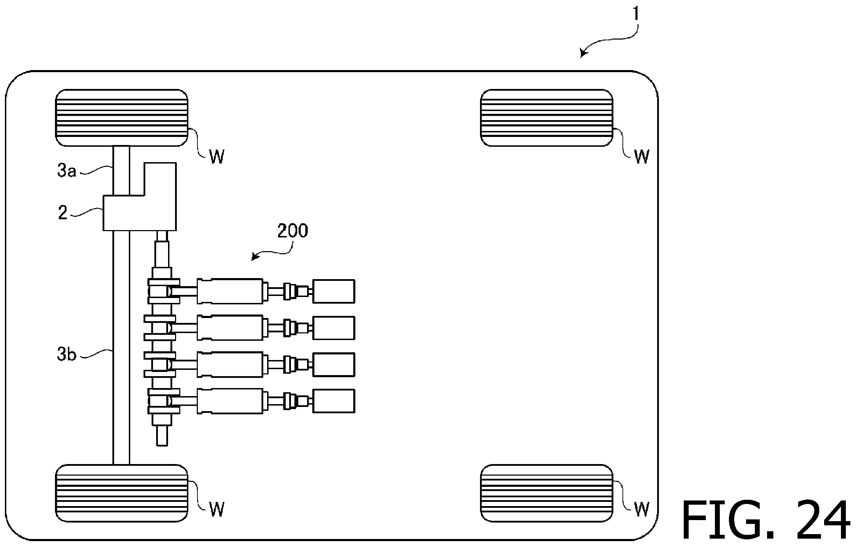

FIG. 24 is a diagram showing a schematic configuration of a power system of an electric car 1 equipped with the electric actuator 200 according to the fourth embodiment of the present invention as a prime mover. The electric car 1 includes a power transmission 2, and left and right drive shafts 3a and 3b. The power transmission 2 includes a transmission, a final reduction gear, and a differential which are not shown. The crankshaft 270 of the electric actuator 200 is connected to an input shaft of the power transmission 2. The drive shafts 3a and 3b are connected to the left and right output shafts of the power transmission 2, respectively. A wheel W is attached to a distal end of each of the drive shafts 3a and 3b. Power output from the electric actuator 200 is transmitted to the drive shafts 3a and 3b via the transmission, the final reduction gear and the differential of the power transmission 2 to rotationally drive the wheels W attached to the distal ends of the drive shafts 3a and 3b.

The electric actuators according to the embodiments of the present invention can be used in place of various prime movers that output rotary motion (e.g., engines, electric motors, hydraulic motors, air motors, steam turbines, etc.).

The exemplary application shown in FIG. 24 is an example of the electric actuators according to the embodiments of the present invention applied to a four-wheeled electric car, but the electric actuators according to the embodiments of the present invention can be used in various types of cars such as two-wheeled cars, three-wheeled cars, cars with six or more wheels such as trucks, buses, and tractors. Furthermore, the electric actuators according to the embodiments of the present invention can be used not only for electric cart but also for hybrid cars.

The electric actuators according to the embodiments of the present invention can be used not only as prime movers for cars but also as prime movers for railroad vehicles.

### <Tenth Embodiment>

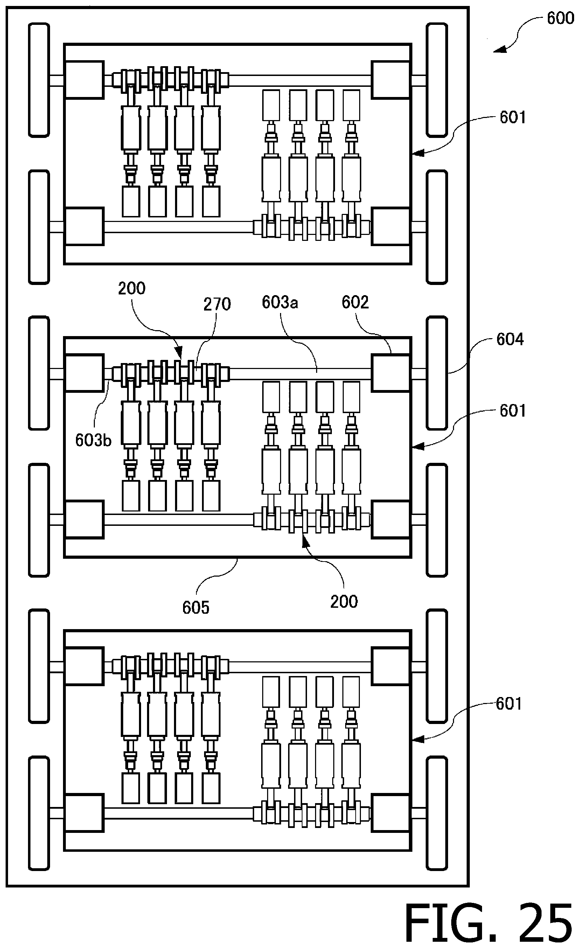

A tenth embodiment described next is an example of the application of the present invention to a railroad system. FIG. 25 is a diagram showing a schematic configuration of a drive mechanism of a railroad car 600 according to the tenth embodiment of the present invention. The railroad car 600 includes a plurality of (in the example shown in FIG. 25, three) bogies 601. The bogie 601 is a dynamic bogie including the electric actuator 200 according to the fourth embodiment of the present invention as a drive device.

The bogie 601 includes two electric actuators 200, two pairs of axles 603 (axles 603a and axles 603b), two pairs of bearings 602, two pairs of axle boxes (not shown), two pairs of axle box support devices (not shown), and two pairs of wheels 604. One end of the axle 603a and one end of the axle 603b are connected to both ends of the crankshaft 270 of electric actuator 200. The wheels 604 are attached to the other ends of the axles 603a and 603b.

The bearings 602 are attached to respective axle boxes, and the axle boxes are attached to the bogie frame 605 via respective axle box support devices. The bearings 602 and the axle boxes are buffer-supported with respect to the bogie frame 605 (frame) by the axle box support devices. The axles 603a and 603b are rotatably supported by respective bearings 602.

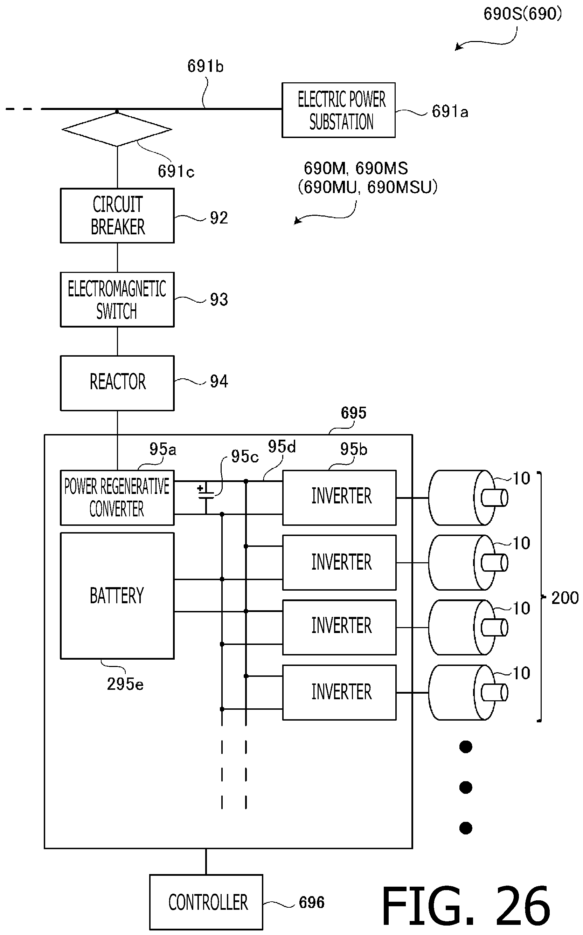

FIG. 26 is a block diagram showing a schematic configuration of an electric power feeding system 690S (electric drive system 690) of the railroad car 600 according to the tenth embodiment of the present invention. The electric power feeding system 690S, together with a plurality of electric actuators 200 (specifically, a plurality of motors 10) mounted on the railroad car 600, constitutes the electric drive system 690.

The railroad car 600 is a dynamic car that collects electric power using an overhead line electric power collection system and includes, as an electric power collector, a pantograph 692c that contacts an overhead line 691b which is a trolley line (contact wire). The overhead line 691b is supplied with system electric power (e.g., three-phase AC) from an electric power substation 691a.

Of the electric drive system 690 (electric power feeding system 690S), a mobile drive system 690M (mobile electric power feeding system 690MS) installed in the railroad car 600 consists of one or more mobile drive units 690MU (mobile electric power feeding system 690MSU) unitized for each corresponding bogie 601. The mobile drive unit 690MU (mobile electric power feeding system 690MSU) may be configured not in units of bogies 601, but in units of railroad cars 600, or in units of trains with multiple railroad cars 600 connected.

According to the electric drive system 690 according to the tenth embodiment of the present invention, the same effect as that of the electric drive system 290 according to the second embodiment of the present invention is obtained. That is, since regenerative electric power is efficiently used to drive the motor 10, it is possible to drive the railroad car 600 (electric actuator 200) with low electric power consumption.

In the present embodiment, the overhead line electric power collection system using pantograph 692c as an electric power collector is employed, but other types of electric power collectors (e.g., view gels, trolley poles, etc.) or other types of electric power collection systems (e.g., third rail system in which electric power collecting shoes contact the electric power feeding rail [third rail] to collect electric power) may be used.

The railroad car 600 of the present embodiment is a bogie type railroad car that uses the bogies 601 as a traveling device and the mobile drive unit 690MU is mounted on the bogie 601, but the present invention is not limited to this configuration. For example, the traveling device and the mobile drive unit 690MU may be directly installed in the car body.

In the present embodiment, the mobile drive unit 690MU (specifically, a servo amplifier 695) of each bogie 601 includes a battery 295e, but the battery 295e may be shared by the mobile drive units 690MU of the plurality of bogies 601. In this case, for example, the battery 295e may be provided only in the servo amplifier 695 of one (or some) of the plurality of bogies 601, and the direct current bus bars 95d of said plurality of bogies 601 may be connected to each other. The battery 295e may also be disposed outside of the servo amplifier 695 (e.g., on the car body) and connected to the direct current bus bars 95d of said plurality of bogies 601.

In the present embodiment, the configuration in which the split axles 603a and 603b are directly connected to both ends of the crankshaft 270 of the electric actuator 200 is employed. However, the present invention is not limited to this configuration. For example, the electric actuator 200 and an undivided axle 603 may be connected via a power transmission device such as a gear device.

In the present embodiment, a shaft box support system which uses a shaft box and a shaft box support device is employed. However, the present invention is not limited to this configuration.

### <Eleventh Embodiment>

Next, an example of the application of the present invention to a tire testing device will be described. A tire testing device according to an eleventh embodiment of the present invention described below is a testing device capable of performing wear tests, endurance tests, driving stability tests and the like on tires.

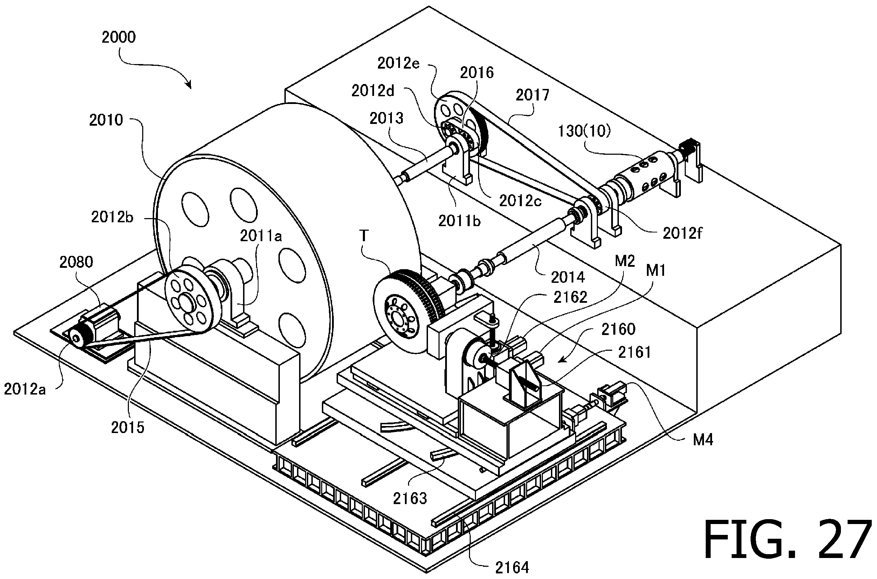

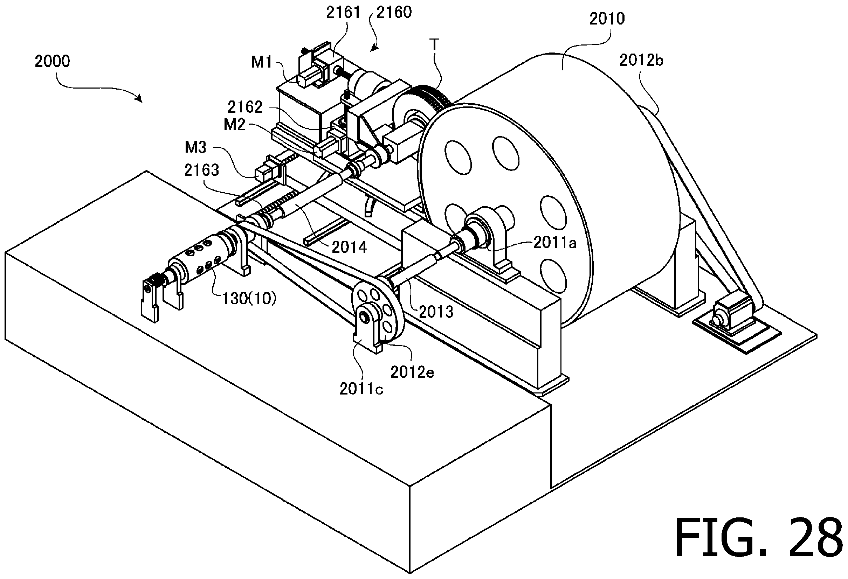

FIGS. 27 and 28 are perspective views of a tire testing device 2000 according to the eleventh embodiment of the present invention, viewed from different directions. The tire testing device 2000 of the present embodiment includes a rotating drum 2010 with a simulated road surface formed on its outer circumference, an alignment adjustment mechanism 2160 that holds a tire T rotatably with the tire T grounded in a predetermined posture on the simulated road surface, a torque generator 130 (slip rate controller) that generates torque to be applied to the tire T, and an inverter motor 2080 that rotationally drives the rotating drum 2010 and a casing of the torque generator 130.

The rotating drum 2010 is rotatably supported by a pair of bearings 2011a. A pulley 2012a is attached to an output shaft of the inverter motor 2080, and a pulley 2012b is attached to one of shafts of the rotating drum 2010. The pulley 2012a and the pulley 2012b are connected by a drive belt 2015 (e.g., toothed belt). The other of the shafts of the rotating drum 2010 has a pulley 2012c attached via a relay shaft 2013. The relay shaft 2013 is rotatably supported by a bearing 2011b near one end portion where the pulley is attached. The pulley 2012c is connected to a pulley 2012d by a drive belt 2016. The pulley 2012d is coaxially fixed to a pulley 2012e and is rotatably supported by a bearing 2011c (FIG. 28) together with the pulley 2012e. The pulley 2012e is also connected to a shaft part 131a of a later-described casing 131 of the torque generator 130 by a drive belt 2017.

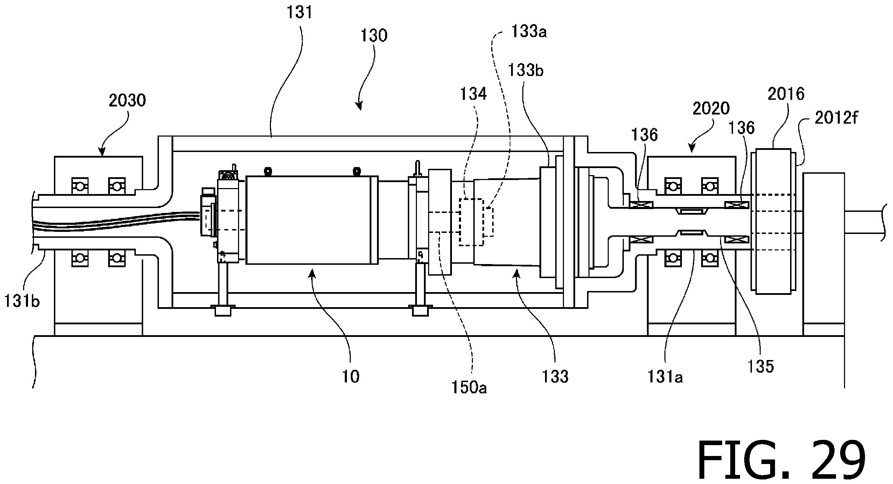

FIG. 29 is a diagram showing an internal structure of the torque generator 130. The torque generator 130 includes a casing 131, and the servomotor 10 and a reduction gear 133 fixed inside the casing 131. In the present embodiment, the servomotor 10 of the same configuration as in the first embodiment is used. Cylindrical shaft parts 131a and 131b are formed at both ends of the casing 131 in an axial direction. The casing 131 is rotatably supported by bearing sections 2020 and 2030 at the shaft parts 131a and 131b. A pulley 2012f is attached to an outer circumference of the shaft part 131a at one end (right end in FIG. 29).

The reduction gear 133 has an input shaft 133a and an output shaft 133b. Rotary motion input to the input shaft 133a is reduced and output to the output shaft 133b. The input shaft 133a of the reduction gear 133 is connected to a drive shaft 150a of the servomotor 10 by a coupling 134. The output shaft 133b of the reduction gear 133 is connected to a coupling shaft 135. It is noted that the reduction gear 133 is optionally provided in the torque generator 130. The coupling shaft 135 may be directly connected to the drive shaft 150a of the servomotor 10 without providing the reduction gear 133 in the torque generator 130.

The coupling shaft 135 is passed through a hollow portion of the cylindrical shaft part 131a of the casing 131 and is rotatably supported by a pair of bearings 136 provided on an inner circumference of the shaft part 131a. A distal end of the coupling shaft 135 protrudes from a distal end of the shaft part 131a. The coupling shaft 135 protruding from the shaft part 131a is connected to a spindle of the alignment adjustment mechanism 2160 via a constant velocity joint 2014 (FIG. 27). A wheel on which a tire T is mounted is attached to the spindle of the alignment adjustment mechanism 2160.

As a result, when the inverter motor 2080 is driven, the rotating drum 2010 rotates and the casing 131 of the torque generator 130 connected to the inverter motor 2080 via the rotating drum 2010 rotates. When the torque generator 130 is not activated, the rotating drum 2010 and the tire T rotate in opposite directions so that their peripheral speeds at the contact area are the same. By activating the torque generator 130, dynamic or static driving and braking forces can be applied to the tire T.

In the present embodiment, power output from the inverter motor 2080 is again transmitted to the rotating drum 2010 via the rotating drum 2010, the relay shaft 2013, the torque generator 130, the constant velocity joint 2014, the spindle of the alignment adjustment mechanism 2160, and the tire T. That is, the power transmission path consisting of the rotating drum 2010, the relay shaft 2013, the torque generator 130, the constant velocity joint 2014, the spindle of the alignment adjustment mechanism 2160, and the tire T constitutes a power circulation system. Therefore, the power of the inverter motor 2080 is used efficiently, thereby enabling operation with less power consumption.

The alignment adjustment mechanism 2160 of the present embodiment is a mechanism that rotatably supports the tire T, which is a test specimen, in a state in which the tire T is mounted on a wheel, presses a tread portion of the tire T against the simulated road surface of the rotating drum 2010, and adjusts orientation of the tire T relative to the simulated road surface and tire load (contact pressure) to set conditions. The alignment adjustment mechanism 2160 includes a tire load adjustment section 2161 that adjusts the tire load by moving a position of a rotation axis of the tire T in a radial direction of the rotating drum 2010, a slip angle adjustment section 2162 that adjusts a slip angle of the tire T relative to the simulated road surface by tilting the rotation axis of the tire T around a perpendicular line of the simulated road surface, a camber angle adjustment section 2163 that adjusts a camber angle by tilting the rotation axis of the tire T relative to a rotation axis of the rotating drum 2010, and a traverse device 2164 that moves the tire T in the direction of the rotation axis. The tire load adjustment section 2161, the slip angle adjustment section 2162, the camber angle adjustment section 2163, and the traverse device 2164 include servomotors M1, M2, M3, and M4, respectively. The servomotors M1, M2, M3 and M4 are, for example, AC servomotors.

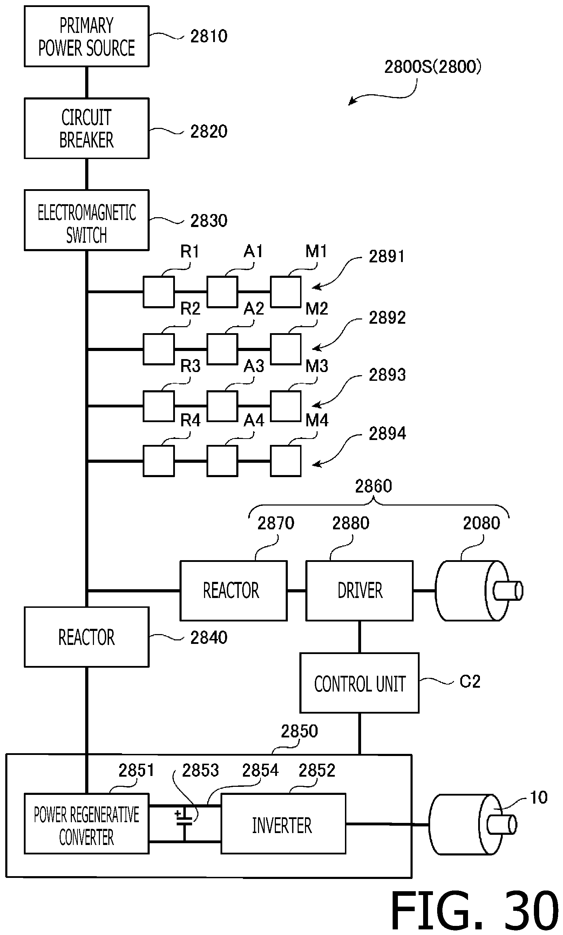

FIG. 30 is a block diagram showing a schematic configuration of an electric power feeding system 2800S (electric drive system 2800) of the second embodiment of the present invention, which provides electric power to the servomotor 10 and the inverter motor 2080.

The electric power feeding system 2800S of the present embodiment differs from the electric power feeding system 90S of the first embodiment in that the electric power feeding system 2800S has an electric power feeding structure 2860 (a reactor 2870 and a driver 2880) that supplies electric power to the inverter motor 2080 branched from a rear stage of an electromagnetic switch 2830, and electric power feeding structures 2891 (a reactor R1 and a servo amplifier A1), 2892 (a reactor R2 and a servo amplifier A2), 2893 (a reactor R3 and a servo amplifier A3), and 2894 (a reactor R4 and a servo amplifier A4) that supply electric power to the servomotors M1, M2, M3, M4 of the alignment adjustment mechanism 2160, respectively. The driver 2880 is a device that generates driving electric power for the inverter motor 2080 and includes an inverter circuit not shown. The driver 2880 and the servo amplifiers A1 to A4 are each communicatively connected to a control unit C2 and operate according to control by the control unit C2. The servo amplifiers A1, A2, A3, and A4 have the same configuration as a servo amplifier 2850.

In a test using the tire testing device 2000 of the present embodiment, the tire T is given a rotary motion that is a composite of the rotation speed output by the inverter motor 2080 and the torque generated by the torque generator 130 (specifically, the servomotor 10). In one example of the test using the tire testing device 2000, the inverter motor 2080 is controlled to output a constant rotation speed and the servomotor 10 is controlled to output fluctuating torque (e.g., random oscillating torque). Specifically, the servomotor 10 is driven to rotate back and forth with varying amplitude and period based on predetermined vibration waveform data. That is, the motor 10 is controlled by control unit C2 to repeat forward and reverse rotations. As a result, acceleration and deceleration of the servomotor 10 are repeated, and the supply of driving electric power from the servo amplifier 2850 to the servomotor 10 and supply of regenerative electric power from the servomotor 10 to the servo amplifier 2850 are repeated.

Most of the regenerative electric power generated by the servomotor 10 is temporarily accumulated in a capacitor 2853 and is then used to drive the servomotor 10. Surplus of the regenerative electric power is supplied to the electric power feeding structures 2860, 2891, 2892, 2893, 2894 via a power regenerative converter 2851 and a reactor 2840 and used to drive the inverter motor 2080 and servomotors M1, M2, M3, M4. Therefore, most of the regenerative electric power generated by the servomotor 10 is reused to drive the servomotors 10, M1 to M4, and the inverter motor 2080, and electric power consumption from a primary power source 2810 used to drive the servomotor 10 is slightly reduced. Regenerative electric power generated by the inverter motor 2080 and the servomotors M1, M2, M3, and M4 is also reused to drive the other motors (i.e., the servomotors 10, M1, M2, M3 and M4, and the inverter motor 2080), further reducing the electric power consumption from the primary power source 2810.

By setting the tire T to the tire testing device 2000 having the configuration described above and driving the inverter motor 2080 for rotation drive, the tire T and the rotating drum 2010 rotate at the same peripheral speed. In this state, the servomotor 10 of the torque generator 130 is driven to apply driving force or braking force to the tire T, thereby enabling tire wear tests, endurance tests, driving stability tests and the like that simulate actual driving conditions.

In the present embodiment, the inverter motor 2080 is used to rotate the tire T and the rotating drum 2010 at the same peripheral speed. However, in place of the driver 2880 and the inverter motor 2080 in FIG. 30, the electric actuator 100 according to the first embodiment including the servomotor 10 and the drive unit 100d may be used. That is, instead of attaching the pulley 2012a directly to the output shaft of the servomotor 10, the drive unit 100d that converts the reciprocating rotation of the servomotor 10 into unidirectional rotation may be provided between the servomotor 10 and the pulley 2012a. This allows regenerative energy to be used for the operation of rotating the tire T and the rotating drum 2010 at the same peripheral speed.

### <Twelfth Embodiment>

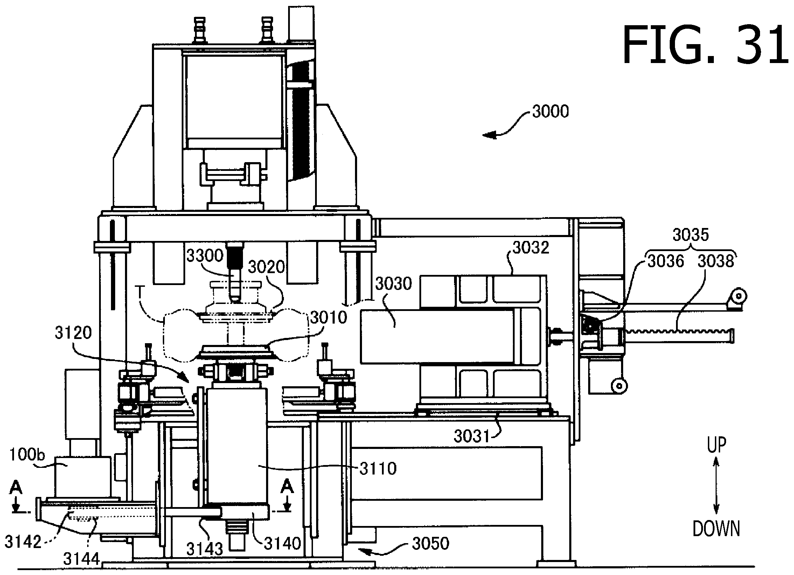

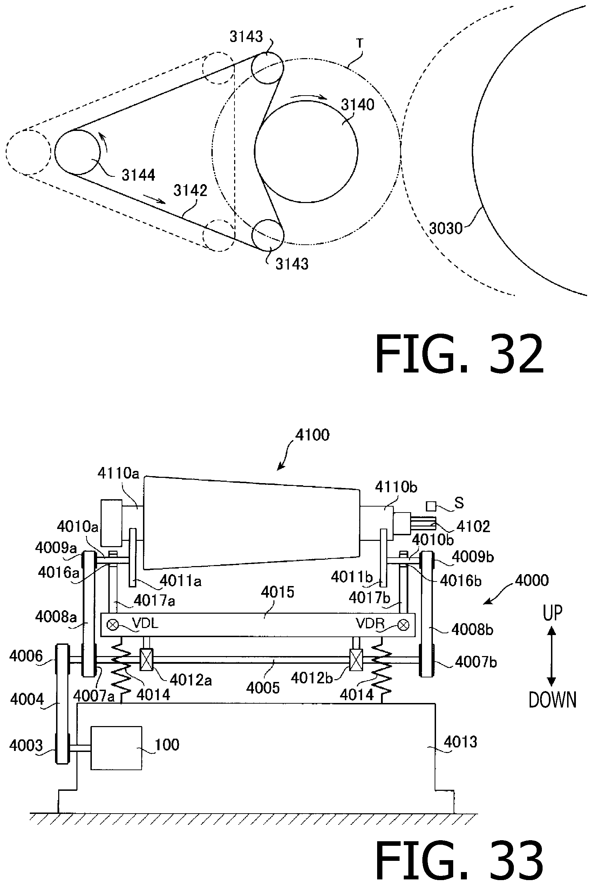

A multi-test device according to a twelfth embodiment of the present invention described below is a test device capable of performing uniformity and dynamic balance tests of tires. FIG. 31 is a side view showing a basic configuration of a uniformity and dynamic balance multi-test device 3000 (hereinafter referred to as the multi-test device 3000). FIG. 32 is a diagram schematically showing a method of rotationally driving a spindle 3120 of the multi-test device 3000.

As shown in FIG. 31, the multi-test device 3000 is configured to hold the tire T between a lower rim 3010 and an upper rim 3020 at the top and bottom. More precisely, the multi-test device 3000 nips and holds the tire T between the lower rim 3010 and the upper rim 3020 by inserting and securing a locking shaft 3300, to which the upper rim 3020 is fixed at the upper end, to the spindle 3120.

In the uniformity test, a rotating drum 3030 provided on a side of the spindle 3120 is used. The rotating drum 3030 is mounted on a movable housing 3032 that is slidable on rails 3031 extending in approaching and separating directions with respect to the tire T, and moves in the approaching and separating directions with respect to the tire T by a rack and pinion mechanism 3035 (pinion 3036 and rack 3038) driven by a motor not shown. The rotating drum 3030 can be rotated at any desired rotation speed by an electric actuator (hereinafter referred to as "electric actuator 100a") not shown. A configuration of the electric actuator 100a is the same as that of the electric actuator 100 described above in the first embodiment.

When conducting the uniformity test, the rotating drum 3030 is brought into contact with the tire T by the rack and pinion mechanism 3035, and the rotating drum 3030 is then pressed against the tire T with a force of several hundred kgf or more. The rotating drum 3030 is then rotated in this state (thus the tire T in contact with the rotating drum 3030 also rotates along with the rotating drum 3030), and variation in force generated on the rotating tire is measured from load fluctuation at this time with a triaxial piezoelectric element installed on a side surface of a spindle housing 3110.

In the present embodiment, the rotating drum 3030 is rotated using the electric actuator 100a. This allows the 3030 rotating drum to rotate while utilizing regenerative energy to perform the uniformity test.

On the other hand, the dynamic balance test is a test that measures eccentricity of the tire by rotating the tire T together with the spindle 3120 in a state where the rotating drum 3030 is separated from the tire T, and measuring the eccentricity of the tire from an oscillating force generated by imbalance of the tire T at that time.

At a lower end of spindle 3120, a pulley 3140 for rotationally driving the spindle 3120 during dynamic balance tests is attached. An electric actuator 100b, which can move horizontally toward the spindle 3120 by means of a rack and pinion mechanism not shown, is installed on a base 3050 to which the spindle 3120 is fixed, and the spindle 3120 is rotated by the electric actuator 100b. A configuration of the electric actuator 100b is the same as the electric actuator 100 described above in the first embodiment. This allows the spindle 3120 to be rotated while utilizing regenerative energy to perform dynamic balance tests.

A drive pulley 3144 is attached to an output rotary shaft of the electric actuator 100b at the same height as the pulley 3140 of the spindle 3120. As shown in FIG. 32, a pair of driven pulleys 3143 are rotatably installed at the same height as the drive pulley 3144 and the pulley 3140 of the spindle 3120. The driven pulleys 3143 move back and forth together with the electric actuator 100b (the drive pulley 3144) by the above-mentioned not-shown rack and pinion mechanism. An endless belt 3142 is tacked across the drive pulley 3144 and the driven pulleys 3143, and the endless belt 3142 can be made to advance at a predetermined speed with the electric actuator 100b.

By driving the electric actuator 100b in the state where the endless belt 3142 is in contact with the pulley 3140 (a state shown with a solid line in FIG. 32) by the rack-and-pinion mechanism, the pulley 3140 rotates and the spindle 3120 rotates with the tire T held between the lower rim 3010 and the upper rim 3020. At this time, the excitation force is measured by the triaxial piezoelectric element installed on the side surface of the spindle housing 3110.

In the present embodiment, the electric actuator 100b can be used to rotate the spindle 3120 while using regenerative energy to perform dynamic balance tests.

That is, the multi-test device 3000 is provided with two electric actuators 100a and 100b that are identical to the electric actuator 100 of the first embodiment, with electric actuator 100a used to rotate the rotating drum 3030 and the electric actuator 100b used to rotate the spindle 3120. This allows tests to be conducted while utilizing regenerative energy for both uniformity and dynamic balance tests.

### <Thirteenth Embodiment>

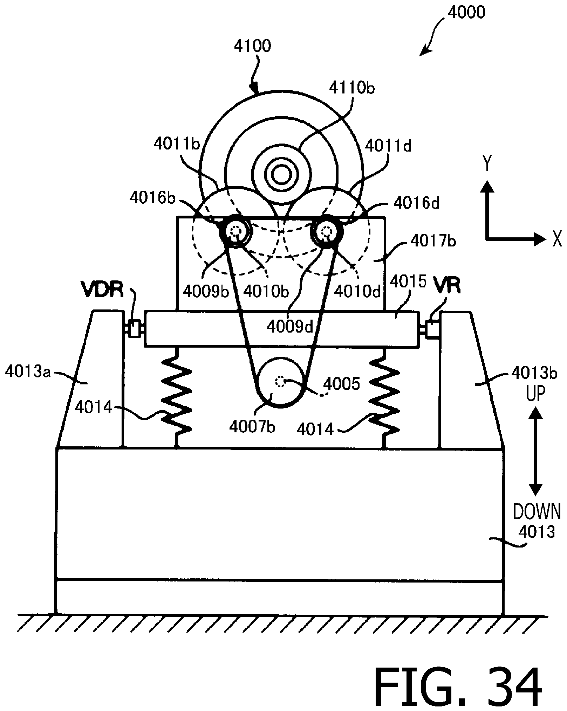

A balance measurement device 4000 according to a thirteenth embodiment of the present invention described below is a test device capable of measuring balance of a rotating body. FIGS. 33 and 34 are a front view and a side view, respectively, of the balance measurement device 4000 according to the embodiment of the present invention. In the following description, a vertical direction in FIG. 33 is defined as a Y-axis direction, and a direction perpendicular to both the vertical direction and a rotation axis direction of the rotating body is defined as an X-axis direction. The rotating body 4100 in the present embodiment is, for example, a crankshaft, and the balance measurement device 4000 is, for example, a device for measuring the balance of the crankshaft.

A device frame of the balance measurement device 4000 consists of a base 4013, a plurality of springs 4014 extending vertically upward from the base 4013, and a table 4015 supported by the springs 4014. Drive shaft bearings 4012a and 4012b are attached to a lower surface of the table 4015. A drive shaft 4005 is rotatably supported by the drive shaft bearings 4012a and 4012b. As shown in FIG. 34, a first side wall 4013a and a second side wall 4013b, which can be regarded as almost rigid, extend vertically upward from both ends of the base 4013 in the X-axis direction.

The electric actuator 100 according to the first embodiment is attached to the base 4013. A pulley 4003 is attached to a drive shaft of the electric actuator 100. On the other hand, a first pulley 4006 is attached to one end of the drive shaft 4005, and a first endless belt 4004 is tacked across this first pulley 4006 and the pulley 4003 attached to the drive shaft of the electric actuator 100. By driving the electric actuator 100, the drive shaft 4005 can be driven to rotate via the first endless belt 4004.

A first table side wall 4017a and the second table side wall 4017b that are parallel to each other are fixed vertically above a top surface of the table 4015. The first table side wall 4017a and the second table side wall 4017b are rigid bodies having extremely high rigidity compared to a spring constant of the springs 4014. Driven shaft bearings 4016a and 4016c are fixed to the first table side wall 4017a, and driven shaft bearings 4016b and 4016d are fixed to the second table side wall 4017b. Only the driven shaft bearings 4016a and 4016b are shown in FIG. 33, while the driven shaft bearings 4016c and 4016d are disposed on the far side of the driven shaft bearings 4016a and 4016b in FIG. 33, respectively. The driven shaft bearings 4016a, 4016b, 4016c, and 4016d rotatably support driven shafts 4010a, 4010b, 4010c, and 4010d (only 4010a and 4010b are shown in FIG. 33), respectively.

Pulleys 4009a, 4009b, 4009c, and 4009d are attached to one end of the driven shafts 4010a, 4010b, 4010c, and 4010d, respectively. Second pulleys 4007a and 4007b are attached to one end of the drive shaft 4005 adjacent to the pulley 4006 and to the other end of drive shaft 4005. Across the second pulley 4007a, the pulley 4009a attached to the driven shaft 4010a and the pulley 4009c attached to the driven shaft 4010c, and across the second pulley 4007b, the pulley 4009b attached to the driven shaft 4010b and the pulley 4009d attached to the driven shaft 4010d, endless belts 4008a and 4008b are tacked, respectively. Therefore, when the drive shaft 4005 rotates, power is transmitted to the driven shafts 4010a and 4010c via the second endless belt 4008a, and as a result, the driven shafts 4010a and 4010c rotate. The power from the drive shaft 4005 is also transmitted to the driven shafts 4010b and 4010d via the second endless belt 4008b, and as a result, the driven shafts 4010b and 4010d also rotate.

Rollers 4011a, 4011b, 4011c, and 4011d are attached to the other ends of the driven shafts 4010a, 4010b, 4010c, and 4010d, respectively. One end 4110a of a rotary shaft of the rotating body 4100 is placed on the rollers 4011a and 4011c, and the other end 4110b of the rotary shaft of the rotating body 4100 is placed on the rollers 4011b and 4011d, respectively. The rotating body 4100 rotates in accordance with rotation of these rollers 4011a, 4011b, 4011c, and 4011d. That is, the rotating body 4100 can be rotated while utilizing regenerative energy by driving the electric actuator 100.

A keyway 4102 is formed at the other end 4110b of the rotating body 4100. A sensor S for detecting the keyway 4102 is further disposed on the balance measurement device 4000.

Furthermore, as shown in FIGS. 33 and 34, vibration pickups VDL and VDR are attached between the first side wall 4013a of the base 4013 and the table 4015. The rotating body 4100, which is a crankshaft with dynamic imbalance, vibrates as it rotates. In the balance measurement device of the present embodiment, the vibration of the rotating body 4100 (crankshaft) is transmitted to the table 4015 via the rollers 4011a, 4011b, 4011c and 4011d, first and second table side walls 4017a, 4017b, and the like. The vibration pickups VDL and VDR detect the vibration transmitted from the rotating body 4100 (crankshaft) to the table 4015. In other words, the vibration pickups VDL and VDR detect fluctuations in the load applied by the rotating body 4100 (crankshaft) to the rollers 4011a, 4011b, 4011c and 4011d.

The vibration pickups VDL and VDR are acceleration sensors capable of measuring acceleration in two components (in the X-axis and Y-axis directions) perpendicular to the rotary shaft of the rotating body 4100, respectively. The vibration pickup VDL is attached on the same XY plane as the first table side wall 4017a, and the vibration pickup VDR is attached on the same XY plane as the second table side wall 4017b.

Piezoelectric actuators VL and VR are attached between the second side wall 4013b of the base 4013 and the table 4015. The piezoelectric actuator VL is attached on the same XY plane as the first table side wall 4017a, and the piezoelectric actuator VR is attached on the same XY plane as the second table side wall 4017b. The piezoelectric actuators are members that can expand and contract according to the magnitude of the applied voltage to displace an object being in contact with the piezoelectric actuators, and thus the table 4015 can be freely vibrated by controlling signals to be input to the piezoelectric actuators VL and VR.

### <Fourteenth Embodiment>

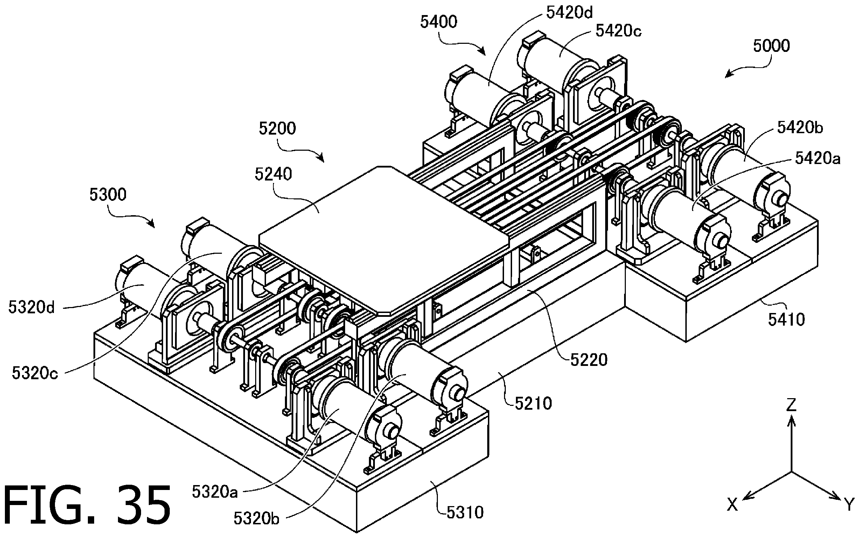

FIG. 35 is a perspective view of a collision simulation test device 5000 according to a fourteenth embodiment of the present invention. The collision simulation test device 5000 is a device that reproduces impacts that act on automobiles and the like (including railroad cars, aircraft, and ships), occupants, and equipment of the automobiles and the like, at the time of collision of the automobiles and the like. The collision simulation test device 5000 of the present embodiment can also be used as an impact test device for evaluating durability and reliability against impact by applying strong impact waves to products and parts.

The collision simulation test device 5000 includes a table 5240 that is used to resemble a frame of a vehicle of a car. A test piece, such as a seat with an occupant dummy on it or a high-voltage battery for an electric car, are to be attached on the table 5240. When the table 5240 is driven at a set acceleration (e.g., an acceleration equivalent to an impact that acts on a frame of a vehicle during a crash), the test piece attached to the table 5240 is subjected to an impact similar to that of an actual crash. Damage on the test piece at this time (or damage predicted from measurement results by acceleration sensors or other devices attached to the test piece) is used to evaluate safety of occupants.

The collision simulation test device 5000 of the present embodiment is configured to allow the table 5240 to be driven in only one horizontal direction. As shown in FIG. 35 with coordinate axes, a movable direction of the table 5240 is defined as an X-axis direction, a horizontal direction perpendicular to the X-axis direction is defined as a Y-axis direction, and the vertical direction is defined as the Z-axis direction. The X-axis positive direction is referred to as forward, the X-axis negative direction is referred to as backward, the Y-axis negative direction is referred to as right, and the Y-axis positive direction is referred to as left, based on a travelling direction of a vehicle being simulated. The X-axis direction in which the table 5240 is driven is referred to as a "drive direction." In a collision simulation test, a large acceleration is applied to the table 5240 in a direction opposite to the travelling direction of the vehicle (i.e., backward).

The collision simulation test device 5000 includes a test section 5200 that includes the table 5240, a front drive section 5300 and a rear drive section 5400 that drive the table 5240, four belt mechanisms 5100 (belt mechanisms 5100a, 5100b, 5100c and 5100d) that convert rotary motion generated by each of the drive sections 5300 and 5400 into translational motion in the X axis direction and transmit the motion to the table 5240, and a control system (not shown).

The test section 5200 is disposed at the central portion of the collision simulation test device 5000 in the X-axis direction, and the front drive section 5300 and the rear drive section 5400 are disposed adjacent to the front and rear of the test section 5200, respectively.

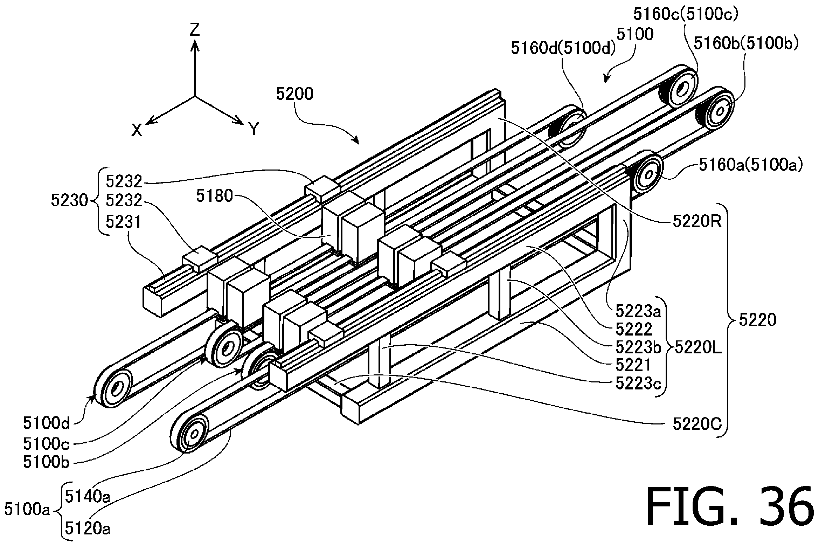

FIG. 36 is a perspective view showing a structure of the test section 5200 and the belt mechanism 5100. For convenience of explanation, the table 5240 and a base block 5210 (described later), which are components of the test section 5200, are omitted in FIG. 36.

In addition to the table 5240, the test section 5200 includes the base block 5210 (FIG. 35), a frame 5220 attached on the base block 5210, and a pair of linear guideways 5230 (hereinafter referred to as "linear guides 5230") attached on the frame 5220. The pair of linear guides 5230 supports the table 5240 to be movable only in the X-axis direction (drive direction).

As shown in FIG. 36, the frame 5220 has a pair of left and right half-frames (a right frame 5220R and a left frame 5220L) connected with a plurality of connecting bars 5220C extending in the Y-axis direction. Since the right frame 5220R and the left frame 5220L have the same structure (strictly speaking, mirror image relationship), only the left frame 5220L will be described in detail.

The left frame 5220L has a mounting part 5221 and a rail support part 5222 each extending in the X-axis direction, and three connecting parts 5223 (5223a, 5223b, 5223c) extending in the Z-axis direction and that connect the mounting part 5221 and rail support part 5222. As shown in FIG. 35, a length of the mounting part 5221 is substantially equal to a length of the base block 5210 in the X-axis direction, and the mounting part 5221 is supported in its entire length by the base block 5210. A rear end of the mounting part 5221 and a rear end of the rail support part 5222 are connected to each other by the connecting part 5223a.

The rail support part 5222 is longer than the mounting part 5221 (i.e., longer than the base block 5210), and a distal end of the rail support part 5222 protrudes forward of the base block 5210 and is located above the front drive section 5300.

The linear guide 5230 includes a rail 5231 extending in the X-axis direction, and two carriages 5232 that travel on the rail 5231 via rolling elements. The rails 5231 of the pair of linear guides 5230 are fixed to upper surfaces of the rail support parts 5222 of the right frame 5220R and the left frame 5220L, respectively. A length of the rail 5231 is substantially equal to the length of the rail support part 5222, and the entire length of the rail 5231 is supported by the rail support part 5222. A plurality of attachment holes (screw holes) are provided on an upper surface of the carriage 5232, and the table 5240 is provided with a plurality of through holes corresponding to the attachment holes of the carriage 5232. The carriage 5232 is fastened to the table 5240 by fitting bolts (not shown) that are passed through respective through-holes of the table 5240 into respective attachment holes of the carriage 5232. The table 5240 and the four carriages 5232 constitute a dolly (thread).

The table 5240 is provided with an attachment structure such as screw holes for attaching a seat or other test piece (not shown), so that the test piece can be directly attached to the table 5240. Since this eliminates the need for a mounting plate or other component for attaching the test piece, a weight of a movable portion to which the impact is to be applied can be reduced, thereby enabling application of impacts to the test piece with high fidelity up to high frequency components.

As shown in FIG. 36, each belt mechanism 5100 includes a toothed belt 5120, a pair of toothed pulleys (a first pulley 5140 and a second pulley 5160) around which the toothed belt 5120 is wound, and a pair of belt clamps 5180 for securing the toothed belt 5120 to the table 5240.

Four toothed belts 5120 are arranged in parallel between the right frame 5220R and the left frame 5220L. Each of the toothed belts 5120 is secured to the table 5240 by the belt clamps 5180 at two points along its lengthwise direction, respectively.

As shown in FIG. 35, the front drive section 5300 includes a base block 5310, and four electric actuators 5320 (5320a, 5320b, 5320c and 5320d) mounted on the base block 5310. The rear drive section 5400 includes a base block 5410, and four electric actuators 5420 (5420a, 5420b, 5420c and 5420d) mounted on the base block 5410. Each of the eight electric actuators has the same configuration as the electric actuator 100 according to the first embodiment, with slight differences in position and orientation of the installation, and length and spacing of components, but the basic configuration is the same. Basic configurations of the front drive section 5300 and the rear drive section 5400 are also in common.

A not-shown controller synchronously controls driving of servomotors of the electric actuators 5320a to 5320d and 5420a to 5420d based on an input acceleration waveform, thereby providing acceleration to the table 5240 in accordance with the above acceleration waveform. In the present embodiment, the controller drives all the eight servomotors to rotate back and forth in the same phase. This allows acceleration to be given to the table 5240 by outputting unidirectional rotary motion from each electric actuator while utilizing regenerative energy.

The electric actuators according to the embodiments of the present invention can be used in place of various prime movers that output rotary motion (e.g., engines, electric motors, hydraulic motors, air motors, steam turbines and the like).

The electric actuators according to the embodiments of the present invention can be used as a prime mover not only for various electric cars such as electrically powered 2-, 3- or 4-wheeled vehicles or trucks, buses and tractors with 6 or more wheels, but also for railroad vehicles. That is, the electric actuators according to the embodiments of the present invention can be used as a prime mover of any vehicle. The electric actuators according to the embodiments of the present invention can also be used as a prime mover for aircraft (e.g., propeller-driven aircraft), helicopters and other aircraft, and ships. That is, the electric actuator according to the embodiment of the present invention can be used as a prime mover of any mobility vehicles.

The electric actuators according to the embodiments of the present invention can also be used as a prime mover for various industrial machinery such as construction machinery, agricultural machinery, woodworking machinery, working machines, forging machinery, injection molding machines, robots, and transportation machinery (e.g., cranes, elevators, and conveyors).

The electric actuators according to the embodiments of the present invention can also be used as a prime mover for various home appliances (washing machines, refrigerators, air conditioners, compressors and the like).

The electric actuators according to the embodiments of the present invention can also be used as a prime mover for driving a hydraulic pump or compressor.

The foregoing is a description of exemplary embodiments of the present invention. Embodiments of the present invention are not limited to those described above, and various variations are possible within the scope of the technical concept of the present invention. For example, appropriate combinations of the embodiments explicitly indicated by way of example in the specification and/or obvious embodiments are also included in the embodiments of the present invention.

In the drive unit 100d described above, the screw shaft 41 of the ball screw 40 is directly connected to the shaft 11 of the motor 10, but the drive unit may be provided with a reduction gear, and the motor 10 and the ball screw 40 may be connected via the reduction gear.

The electric drive system 90 (electric power feeding system 90S) (FIG. 5) of the first embodiment may be provided with the plug 291 and the battery 295e as in the fourth embodiment.

The plug 291 and the battery 295e may be removed from the electric drive system 290 (electric power feeding system 290S) (FIG. 16) of the fourth embodiment, and the circuit breaker 92 may be directly connected to the primary power source 91.

The circuit breaker 92, the electromagnetic switch 93, and/or the reactor 94 may be removed from the electric drive system 290 (electric power feeding system 290S) (FIG. 16) of the fourth embodiment and may be provided in the front stage (primary power source side) of the plug 291.

In the electric drive system 90 (electric power feeding system 90S) (FIG. 5) of the first embodiment, an AC generator may be used as the primary power source 91.

In the electric drive system 290 (electric power feeding system 290S) (FIG. 16) of the fourth embodiment or the electric drive system 690 (electric power feeding system 690S) (FIG. 26) of the eleventh embodiment, the battery 295e may be removed, and the capacitor 95c with large capacitance may be used to take on the storage function of battery 295e.

In the electric drive system 290 (electric power feeding system 290S) (FIG. 16) of the fourth embodiment, a configuration in which a plurality of inverters 95b are provided for one servo amplifier 295, and the inverters 95b are connected to the motors 10, respectively (i.e., a configuration in which the power regenerative converter 95a, the capacitor 95c and the direct current bus bar 95d are shared by a plurality of motors 10) is employed, but the present invention is not limited to this configuration. For example, the servo amplifier 95 of the first embodiment (FIG. 5) may be provided for each motor 10. In this case, for example, the wiring is branched at the rear of the reactor 94, and the servo amplifier 95 is connected to each branch wiring. Alternatively, the reactor 94 may be provided for each servo amplifier 95, the wiring may be branched at a stage after the electromagnetic switch 93, and the reactor 94 and the servo amplifier 95 may be connected to each branch wiring.

The electric actuator 100 according to the first embodiment of the present invention described above includes a single drive unit 100d, the electric actuator 200 according to the fourth embodiment of the present invention includes four drive units 200d, and the electric actuator 201 according to the fifth embodiment of the present invention includes two drive units 200d, but the present invention is not limited to these configurations, and any number of drive units can be provided in the electric actuator.

Each of the electric actuators 100, 200 and 201 described above include a single crankshaft (crankshaft 70, crankshaft 270 and crankshaft 270a), but may be divided into a plurality of crankshafts. For example, if the electric actuator includes four drive units, the crankshaft may be divided into two, with two drive units 100d connected to each crankshaft. In this case, the divided plurality of crankshafts 70 are interconnected for example by a gear mechanism or a winding transmission mechanism such as belt mechanism so that the power of each crankshaft 70 is combined. By dividing the crankshafts 70, more freedom in the arrangement of the plurality of drive units is provided, which enables downsizing.

The tire testing device 2000 according to the eleventh Embodiment, the multi-test device 3000 according to the twelfth Embodiment, the balance measurement device 4000 according to the thirteenth Embodiment, and the collision simulation test device 5000 according to the fourteenth Embodiment show examples in which the electric actuator 100 is used, but the electric actuator to be used in these devices is not limited to the electric actuator 100 according to the first embodiment. For example, electric actuators with two cylinders or more, such as the electric actuator 200 and the electric actuator 201, may be used.

In each of the above embodiments, the motor 10 is an AC servomotor, but another type of electric motor of which drive amount (rotation angle) can be controlled, such as a DC servomotor or stepping motor, may be used as the motor 10.

In the above fourth and tenth embodiments, the configurations in which an electric power feeding system includes a generator are illustrated, but the generator may be provided not only to the electric power feeding systems of the fourth and tenth embodiment but also to the electric power feeding systems of the other embodiments.

In each of the above embodiments, the power regenerative converter 95a is used that is capable of returning excess regenerative electric power from the servo amplifier 95 to the primary power source 91 side, but a converter without an electric power regenerative function for returning excess electric power to the primary power source 91 side may be used. When a converter without an electric power regenerative function is used, it is desirable to provide a device that stores excess electric power (e.g., a large-capacity capacitor or a large-capacity battery) in the servo amplifier 95 instead of providing a regenerative resistance that absorbs regenerative electric power in the servo amplifier 95.

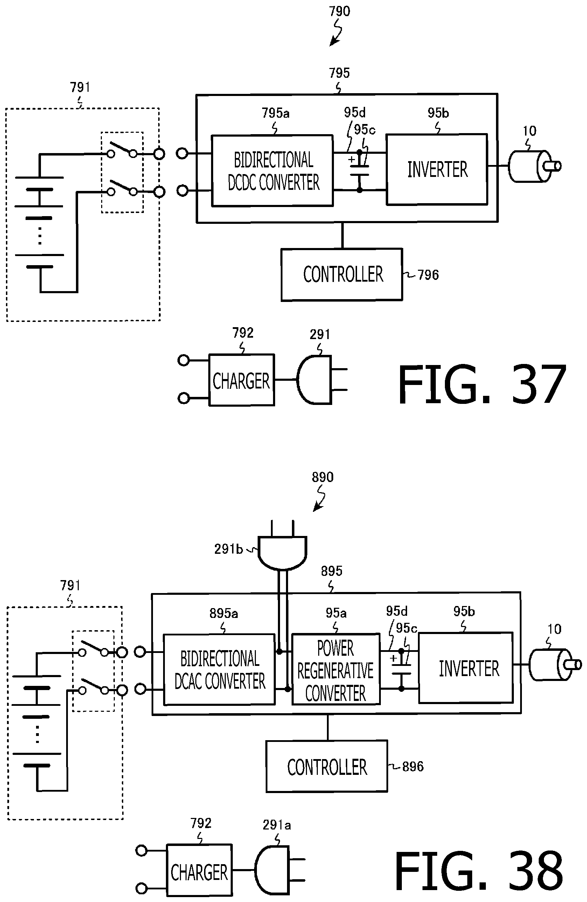

FIGS. 37 and 38 are diagrams showing variations of the electric power feeding system that supplies electric power to the electric actuator according to each of the embodiments. In each of the above embodiments, a system that converts electric power supplied from a primary power source to drive an electric motor is illustrated, but electric power to be supplied from a power source to the system is not limited to alternating current electric power. As shown in FIGS. 37 and 38, the motor 10 can be driven by supplying direct current electric power supplied from a battery 791 to an inverter via a converter. In this case, the regenerative electric power is stored in the battery 791 instead of being output to the primary power source.

An electric power feeding system 790S (electric drive system 790) shown in FIG. 37 includes a bidirectional DCDC converter 795a as the converter. First, a charger 792 is connected to the battery 791, and the battery 791 is charged by the electric power supplied via the charger 792 from the plug 291 plugged into an outlet (not shown) of a primary power source. Next, the battery 791 is connected to a servo amplifier 795, and electric power from the battery 791 is supplied to inverter 95b via the bidirectional DCDC converter 795a to drive the motor 10, and regenerative electric power from the inverter 95b is output to the battery 791 via the bidirectional DCDC converter 795a.

An electric power feeding system 890S (electric drive system 890) shown in FIG. 38 includes a bidirectional DCAC converter 895a upstream of the power regenerative converter 95a. First, the charger 792 is connected to the battery 791, and the battery 791 is charged by the electric power supplied via the charger 792 from a plug 291a that is plugged into a primary electric power outlet (not shown). Next, the battery 791 is connected to a servo amplifier 895, and electric power from the battery 791 is supplied to the inverter 95b via the bidirectional DCAC converter 895a and the power regenerative converter 95a to drive the motor 10, and regenerative electric power from the inverter 95b is output via the power regenerative converter 95a and the bidirectional DCAC converter 895a to the battery 791. The power regenerative converter 95a and the bidirectional DCAC converter 895a are connected to a plug 291b. Electric power from the plug 291b which is plugged into a primary electric power outlet (not shown) is supplied to the inverter 95b via the power regenerative converter 95a, and this electric power can also drive motor 10. The electric power supplied from plug 291b is also supplied to the battery 791 via the bidirectional DCAC converter 895a, and this electric power can be used to charge the battery 791.

In each of the above embodiments, electric power was regenerated from the motor 10 to the primary power source via the inverter 95b and the power regenerative converter 95a, but the electric power may be regenerated from the motor 10 to the primary power source without going through the inverter 95b and power regenerative converter 95a.

This specification also discloses the following inventions.

### [Additional Note 1]

An electric actuator including:
an electric motor;
a drive device that supplies driving electric power to the electric motor;
a controller capable of controlling the drive device so that the electric motor outputs repeating reciprocating rotary motion; and
a motion converter that converts the reciprocating rotary motion into a unidirectional rotary motion,
wherein the drive device includes:
a converter that converts alternating current electric power supplied from a power source into direct current electric power, and
an inverter that generates driving electric power from the direct current electric power.

### [Additional Note 2]

The electric actuator according to Additional Note 1,
wherein the motion converter includes:
a first disk part connected to a shaft of the electric motor;
a first pin eccentrically attached to the first disk part;
a second disk part connected to an output shaft of the motion converter;
a second pin eccentrically attached to the second disk part; and
a connecting rod that connects the first disk part to the second disk part,
wherein:
an end of the connecting rod is rotatably coupled to the first pin, and
the other end of the connecting rod is rotatably coupled to the second pin.

### [Additional Note 3]

The electric actuator according to Additional Note 1, wherein the motion converter includes:
a first motion converter that converts the reciprocating rotary motion into reciprocating linear motion; and
a second motion converter that converts the reciprocating linear motion into the unidirectional rotary motion.

### [Additional Note 4]

An electric actuator including:
an electric motor;
a first motion converter that converts rotary motion into linear motion;
a second motion converter that converts the linear motion into a rotary motion;
a drive device that supplies driving electric power to the electric motor; and
a controller that controls the drive device,
wherein the drive device includes:
a converter that converts alternating current electric power supplied from a power source into direct current electric power, and
an inverter that generates driving electric power from the direct current electric power, wherein the controller controls the electric motor to be driven to repeatedly rotate back and forth.

### [Additional Note 5]

The electric actuator according to Additional Note 4,
wherein the first motion converter is a ball screw and includes:
a linear motion part that is fixed to a nut of the feed screw and moves linearly together with the nut, the linear motion part including a first pin;
a crankshaft including an eccentric crank pin; and
a connecting rod rotatably connected to the first pin and the crank pin.

### [Additional Note 6]

The electric actuator according to any one of Additional Note 1 to Additional Note 5, wherein the drive device includes:
a direct current bus bar consisting of a pair of conductors that connects the converter to the inverter; and
a capacitor that connects the pair of conductors.

### [Additional Note 7]

The electric actuator according to any one of Additional Note 1 to Additional Note 5 including a plurality of the electric motors,
wherein the drive device includes:
a system of direct current bus bar consisting of a pair of conductors connected to the converter;
a plurality of the inverters connected to the system of direct current bus bar; and
a capacitor that connects the pair of conductors.

### [Additional Note 8]

The electric actuator according to any one of Additional Note 1 to Additional Note 7, wherein the converter is a PWM converter.

### [Additional Note 9]

The electric actuator according to any one of Additional Note 1 to Additional Note 8, wherein the controller controls the electric motor to be driven to repeatedly rotate back and forth at a frequency of 3Hz or more.

### [Additional Note 10]

The electric actuator according to any one of Additional Note 1 to Additional Note 9 including a generator that generates electric power using power generated by the electric motor.

### [Additional Note 11]

The electric actuator according to Additional Note 10 including an inverter that converts the electric power generated by the generator into alternating current of the same quality as a system electric power and supplies the alternating current to a power source side.

### [Additional Note 12]

An electric car including:
a wheel; and
the electric actuator according to any one of Additional Note 1 to Additional Note 11 that outputs rotary motion for driving the wheel.

### [Additional Note 13]

A railroad vehicle including:
a wheel; and
the electric actuator according to any one of Additional Note 1 to Additional Note 11 that outputs rotary motion for driving the wheel.

### [Additional Note 14]

The railroad vehicle according to Additional Note 13 including a dolly including:
the wheel; and
the electric actuator.

### [Additional Note 21]

An electric actuator including:
an electric motor that repeats forward rotation and reverse rotation at a desired frequency; and
a motion converter that converts forward and reverse rotary motions output by the electric motor into unidirectional rotary motion.

### [Additional Note 22]

The electric actuator according to Additional Note 21 further including a drive device that supply electric power supplied from a power source to the electric motor,
wherein the drive device includes a power regenerative converter that regenerates, among electric power regenerated from the electric motor while repeating the forward rotation and reverse rotation, electric power that has not been consumed in acceleration of the electric motor to the power source.

### [Additional Note 23]

The electric actuator according to Additional Note 22,
wherein the power regenerative converter outputs, to the power source, electric power regenerated from the electric motor at deceleration phases of the electric motor in the forward rotation and the reverse rotation.

### [Additional Note 24]

The electric actuator according to Additional Note 22, wherein:
the power source consists of an alternating current power source, and
the power regenerative converter consists of a bidirectional ACDC converter.

### [Additional Note 25]

The electric actuator according to Additional Note 22, wherein:
the power source consists of a direct current power source, and
the power regenerative converter consists of a bidirectional DCDC converter.

### [Additional Note 26]

The electric actuator according to any one of Additional Note 22 to Additional Note 25, wherein the drive device further includes a capacitor that accumulates, among the electric power regenerated from the electric motor while repeating the forward rotation and reverse rotation, electric power that has not been consumed in acceleration of the electric motor.

### [Additional Note 27]

The electric actuator according to Additional Note 21 further including a drive device that supplies electric power supplied from a power source to the electric motor,
wherein the drive device includes a capacitor that accumulates, among electric power regenerated from the electric motor while repeating the forward rotation and reverse rotation, electric power that has not been consumed in acceleration of the electric motor.

### [Additional Note 28]

The electric actuator according to any one of Additional Note 22 to Additional Note 27, wherein the electric motor repeats the forward rotation and the reverse rotation at a required frequency of 3Hz or more.

### [Additional Note 29]

The electric actuator according to any one of Additional Note 22 to Additional Note 28, wherein the motion converter includes:
a first motion converter that converts the forward and reverse rotary motions into a reciprocating linear motion; and
a second motion converter that converts the reciprocating linear motion into a unidirectional rotary motion.

### [Additional Note 30]

The electric actuator according to Additional Note 29 further including:
a plurality of electric motors including said electric motor;
a plurality of first motion converters, including said first motion converter, that convert the forward and reverse rotary motions output by each of the plurality of electric motors into the reciprocating linear motion; and
a plurality of second motion converters, including said second motion converter, that convert the reciprocating linear motion converted by each of the plurality of first motion converters into the unidirectional rotary motion,
wherein the plurality of second motion converters share an output shaft for the unidirectional rotary motion.

### [Additional Note 31]

The electric actuator according to Additional Note 29,
wherein the motion converter includes:
a ball screw;
a linear motion part fixed to a nut of the ball screw and that moves linearly together with the nut;
a rotating body that is freely rotatable around a rotation axis; and
a connecting rod rotatably connected to a portion of the rotating body that is eccentric with respect to the rotation axis and to the linear motion part.

### [Additional Note 32]

The electric actuator according to Additional Note 31 wherein:
the rotating body is a crankshaft, and
the connecting rod is rotatably connected to a crank pin of the crankshaft.

### [Additional Note 33]

The electric actuator according to Additional Note 31 wherein:
the rotating body is a spindle, and
the connecting rod is rotatably connected to a projection formed to the spindle at a position eccentric with respect to the rotation axis.

### [Additional Note 34]

The electric actuator according to any one of Additional Note 31 to Additional Note 33 further including a controller that controls the drive device,
wherein the controller controls the drive device to switch rotation of the electric motor between the forward rotation and the reverse rotation while avoiding timings at which the linear motion part reaches dead points where no rotational force is generated to the rotating body by the movement of the linear motion part.

### [Additional Note 35]

The electric actuator according to any one of Additional Note 31 to Additional Note 33 further including a controller that controls the drive device,
wherein the controller controls the drive device so that torque of the electric motor is limited at least at timings at which the linear motion part reaches dead points where no rotational force is generated to the rotating body by the movement of the linear motion part.

### [Additional Note 36]

The electric actuator according to any one of Additional Note 31 to Additional Note 38, wherein the motion converter includes:
a first disk part connected to a shaft of the electric motor and freely rotatable about a first rotation axis;
a second disk part connected to an output shaft of the motion converter and freely rotatable about a second rotation axis; and
a connecting rod rotatable connected to a portion of the first disk part eccentric with respect to the first rotation axis and to a portion of the second disk part eccentric with respect to the second rotation axis.

### [Additional Note 37]

An electric mobility vehicle including the electric actuator according to any one of Additional Note 31 to Additional Note 36.

### DESCRIPTION OF REFERENCE NUMERALS

1 electric car
10 motor
40 ball screw
50, 250, 350 piston (linear motion part)
60, 135, 260, 360, 560 connecting rod
70, 270, 270a crankshaft
80 generator
95, 295, 695, 795, 895, 995, 2850 servo amplifier
95a, 2851 power regenerative converter
95b, 97b, 2852 inverter
95c, 97c, 2853 capacitor
96, 296, C2 controller (control unit)
100, 200, 201, 300, 400, 500, 5320, 5320a, 5420 electric actuator
100d, 200d, 300d, 400d, 500d drive unit
600 railroad car

## Claims

1. An electric actuator comprising:
an electric motor that repeats forward rotation and reverse rotation at a desired frequency; and
a motion converter that converts forward and reverse rotary motions output by the electric motor into unidirectional rotary motion.

2. The electric actuator according to claim 1 further including a drive device that supplies electric power supplied from a power source to the electric motor,
wherein the drive device includes a power regenerative converter that regenerates, among electric power regenerated from the electric motor while repeating the forward rotation and reverse rotation, electric power that has not been consumed in acceleration of the electric motor to the power source.

3. The electric actuator according to claim 2,
wherein the power regenerative converter outputs, to the power source, electric power regenerated from the electric motor at deceleration phases of the electric motor in the forward rotation and the reverse rotation.

4. The electric actuator according to claim 2, wherein:
the power source consists of an alternating current power source, and
the power regenerative converter consists of a bidirectional ACDC converter.

5. The electric actuator according to claim 2, wherein:
the power source consists of a direct current power source, and
the power regenerative converter consists of a bidirectional DCDC converter.

6. The electric actuator according to any one of claim 2 to claim 5,
wherein the drive device further comprises a capacitor that accumulates, among the electric power regenerated from the electric motor while repeating the forward rotation and reverse rotation, electric power that has not been consumed in acceleration of the electric motor.

7. The electric actuator according to claim 1 further comprising a drive device that supplies electric power supplied from a power source to the electric motor,
wherein the drive device includes a capacitor that accumulates, among electric power regenerated from the electric motor while repeating the forward rotation and reverse rotation, electric power that has not been consumed in acceleration of the electric motor.

8. The electric actuator according to any one of claim 2 to claim 7,
wherein the electric motor repeats the forward rotation and the reverse rotation at a required frequency of 3Hz or more.

9. The electric actuator according to any one of claim 2 to claim 8,
wherein the motion converter includes:
a first motion converter that converts the forward and reverse rotary motions into a reciprocating linear motion; and
a second motion converter that converts the reciprocating linear motion into a unidirectional rotary motion.

10. The electric actuator according to claim 9 further comprising:
a plurality of electric motors including said electric motor;
a plurality of first motion converters, including said first motion converter, that convert the forward and reverse rotary motions output by each of the plurality of electric motors into the reciprocating linear motion; and
a plurality of second motion converters, including said second motion converter, that convert the reciprocating linear motion converted by each of the plurality of first motion converters into the unidirectional rotary motion,
wherein the plurality of second motion converters share an output shaft for the unidirectional rotary motion.

11. The electric actuator according to claim 9,
wherein the motion converter includes:
a ball screw;
a linear motion part fixed to a nut of the ball screw and that moves linearly together with the nut;
a rotating body that is freely rotatable around a rotation axis; and
a connecting rod rotatably connected to a portion of the rotating body that is eccentric with respect to the rotation axis and to the linear motion part.

12. The electric actuator according to claim 11, wherein:
the rotating body is a crankshaft, and
the connecting rod is rotatably connected to a crank pin of the crankshaft.

13. The electric actuator according to claim 11 wherein:
the rotating body is a spindle, and
the connecting rod is rotatably connected to a projection formed to the spindle at a position eccentric with respect to the rotation axis.

14. The electric actuator according to any one of claim 11 to claim 13 further comprising a controller that controls the drive device,
wherein the controller controls the drive device to switch rotation of the electric motor between the forward rotation and the reverse rotation while avoiding timings at which the linear motion part reaches dead points where no rotational force is generated to the rotating body by the movement of the linear motion part.

15. The electric actuator according to any one of claim 11 to claim 13 further comprising a controller that controls the drive device,
wherein the controller controls the drive device so that torque of the electric motor is limited at least at timings at which the linear motion part reaches dead points where no rotational force is generated to the rotating body by the movement of the linear motion part.

16. The electric actuator according to any one of claim 1 to claim 8,
wherein the motion converter includes:
a first disk part connected to a shaft of the electric motor and freely rotatable about a first rotation axis;
a second disk part connected to an output shaft of the motion converter and freely rotatable about a second rotation axis; and
a connecting rod rotatably connected to a portion of the first disk part eccentric with respect to the first rotation axis and to a portion of the second disk part eccentric with respect to the second rotation axis.

17. An electric mobility vehicle comprising the electric actuator according to any one of claim 1 to claim 16.
